# EUROPÄISCHE PATENTSCHRIFT

(11) **EP 3 615 324 B1**
(45) Veröffentlichungstag und Bekanntmachung des Hinweises auf die Patenterteilung: **26.01.2022**
(21) Anmeldenummer: 18718107.8
(22) Anmeldetag: 09.04.2018
(51) Int. Cl.: B32B 3/26, B32B 27/08, B32B 27/32, B32B 27/16, B32B 27/18, B32B 27/20

(54) **POLYMERFOLIE ZUM IN-MOULD-ETIKETTIEREN**
POLYMER FILM FOR IN-MOLD LABELING
FILM POLYMÈRE POUR L'ÉTIQUETAGE DANS LE MOULE

(30) Priorität: 25.04.2017 DE 102017003962
(43) Veröffentlichungstag der Anmeldung: 04.03.2020
(73) Patentinhaber: Treofan Germany GmbH & Co. KG, 66539 Neunkirchen (DE)
(72) Erfinder: WEIS, Katja, 66740 Saarlouis (DE); DÜPRE, Yvonne, 67677 Enkenbach-Alsenborn (DE); SCHMIDT, Sandra, 66557 Illingen (DE)
(74) Vertreter: Mai Besier
(86) Internationale Anmeldenummer: PCT/EP2018/000173
(87) Internationale Veröffentlichungsnummer: WO 2018/197035

(56) Entgegenhaltungen:
- EP-A1- 0 557 875
- WO-A1-2004/089621
- WO-A1-2009/010178
- WO-A1-2014/009010
- DE-A1-102010 006 379
- Dow Corning: "HMB-6301 Masterbatch", , 31. Dezember 2016 (2016-12-31), XP002781363, Gefunden im Internet: URL:https://www.yahuchi.com/yahuchi689/pro duct_upload/201610141632106760.pdf

## Beschreibung

Die vorliegende Erfindung betrifft eine Etikettenfolie zum In-Mould-Etikettieren (IML), sowie ein Verfahren zur Herstellung dieser Etikettenfolien und deren Verwendung.

Etikettenfolien umfassen ein umfangreiches und technisch komplexes Gebiet. Man unterscheidet verschiedene Etikettiertechniken, welche hinsichtlich der Prozessbedingungen grundverschieden sind und zwangsläufig an die Etikettenmaterialien unterschiedliche technische Anforderungen stellen. Allen Etikettierprozessen ist gemeinsam, dass als Endergebnis optisch ansprechend etikettierte Behältnisse resultieren müssen, bei denen eine gute Haftung auf dem etikettierten Behältnis gewährleistet sein muss.

Bei den Etikettierverfahren werden sehr verschiedene Techniken zum Applizieren des Etiketts angewendet. Man unterscheidet zwischen Selbstklebeetiketten, Rundumetiketten, Schrumpfetiketten, In-Mold Etiketten, Patch Labelling usw.. Die Verwendung einer Folie aus thermoplastischem Kunststoff als Etikett ist in allen diesen verschiedenen Etikettierverfahren möglich.

Auch beim In-Mould Etikettieren wird zwischen verschiedenen Techniken unterschieden, bei denen verschiedene Verfahrensbedingungen angewendet werden. Allen In-Mould Etikettierverfahren ist gemeinsam, dass das Etikett am eigentlichen Formgebungsverfahren des Behälters teilnimmt und währenddessen appliziert wird. Hierbei kommen jedoch sehr verschiedene Formgebungsverfahren zum Einsatz, wie beispielsweise Spritzgussverfahren, Blasformverfahren und Tiefziehverfahren.

In allen In-Mould-Etikettierverfahren werden einzelne Etiketten zugeschnitten, gestapelt, dem Stapel entnommen und in die jeweilige Form eingelegt. Demzufolge ist die Vereinzelbarkeit (Entstapelbarkeit) der Etiketten ein kritischer Faktor für die Effizienz des gesamten Etikettiervorgangs. Die Optimierung dieser Entstapelbarkeit der Etiketten ist Gegenstand zahlreicher Patentanmeldungen, die überwiegend die Einstellung einer spezielle Rauheit der inneren und/oder äußeren Deckschicht lehren.

Zur Herstellung der bedruckten Etiketten werden aus Kostengründen von der Folie großformatige Bögen abgeschlagen, auf die mehrere Vorlagen nebeneinander gedruckt werden können. In diesem Prozess werden die Bögen von der Rolle herunter geschnitten, unterschuppt, bedruckt und die bedruckten Bögen werden gestapelt. Um eine hohe Taktzahl in diesem Druckprozess zu gewährleisten, werden die Bögen kontinuierlich von der Rolle abgeschlagen und der jeweils neu abgeschlagene Bogen wird teilweise unter den vorherigen Bogen geschoben, so dass eine Reihe geschuppter Bögen entsteht. Hierbei kommen die Innenseite des zu bedruckenden Bogens und die Außenseite des nachfolgenden Bogens kurzzeitig in Kontakt. Der jeweils erste Bogen dieser Reihe wird dem Druckwerk zugeführt, bedruckt und die frisch bedruckten Bögen werden gestapelt. Für den reibungslosen Prozess mit hoher Taktzahl müssen die innere und die äußere Oberfläche der unterschuppten Bögen gut gegeneinander gleiten, dürfen keinesfalls aneinander haften bleiben, aber auch nicht gegeneinander verrutschen, d.h. nicht verschießen. In alternativen Verfahren werden die unbedruckten Bögen zunächst nach dem Zuschnitt unbedruckt gestapelt, bevor diese dem eigentlichen Druckprozess zugeführt werden. Hierbei befinden sich dann ebenfalls die Innenseite und die Außenseite der Etikettenfolie in Kontakt. In dieser Variante ist die Entstapelbarkeit der unbedruckten Bögen eine wichtige Anforderung.

Die bedruckten Bögen werden zunächst gestapelt, dann vom Stapel vereinzelt und aus den bedruckten Bögen werden die einzelnen Etiketten ausgestanzt und ihrerseits ebenfalls gestapelt. Alternativ können die Etiketten auch direkt aus den gestapelten gedruckten Bögen ausgestanzt werden und als Etikettenstapel beim Spritzgußverfahren verwendet werden. Die Vereinzelung der Etiketten von so hergestellten Etikettenstapeln ist noch anfälliger für Störungen, da der Stanzprozeß zu einer Verdichtung des Stapels führt.

Aus wirtschaftlichen Gründen ist es wünschenswert die Bedruckung der Bögen mit einer hohen Geschwindigkeit durchzuführen, die heute auf Grund optimierter Basisfolien immer weiter gesteigert werden konnte. Aber es treten immer wieder Probleme beim Entstapeln der Bögen auf.

Im Rahmen der vorliegenden Erfindung wurde gefunden, dass die Probleme bei der Entstapelung der bedruckten Bögen gehäuft auftreten, wenn die Geschwindigkeit bei der Bedruckung der Bögen besonders hoch war und welches Problem durch diese gesteigerte Bogendruck-Geschwindigkeit verursacht wird. Die Bögen werden nach dem Auftrag der Farben in kürzester Zeit gestapelt, so dass die Druckfarben, gegebenenfalls mit Überlack, auf der Folie noch nicht vollständig getrocknet oder ausgehärtet sind. Die noch feuchten Druckfarben oder/oder unvollständig ausgehärtete Überlackierungen führen zu einer stärkeren Haftung der Etiketten aneinander. Im Extremfall kommt es sogar zu einer derartigen Verklebung, dass Druckfarbe ggf. mit Überlack von der bedruckten Außenseite auf die innere Containerseite übertragen wird.

EP 0 545 650 B1 beschreibt eine Polymerfolie, die fünf coextrudierte, gemeinsam biaxial verstreckte Schichten besitzt und eine vakuolenhaltige Kernschicht aus Polypropylen-Homopolymer mit beidseitig angeordneten Zwischenschichten aus im Wesentlichen Vakuolen-freiem Polypropylen-Homopolymer sowie jeweils eine Außenschicht aus heißsiegelbarem Polymer auf den Zwischenschichten aus im Wesentlichen Vakuolen-freiem Polypropylen-Homopolymer aufweist. Die Folie ist heißsiegelbar, wobei die Zwischenschichten aus Polypropylen-Homopolymer jeweils eine Dicke von 1 bis 5 µm haben. Dabei soll sich die Polymerfolie durch eine gute Einstichfestigkeit auszeichnen. In einem Ausführungsbeispiel wird eine Polymerfolie mit einer Dichte von 0,66 g/cm3, einer optischen Dichte von 0,61 und einem Glanz von 50 bei 20° beschrieben.

EP 0 611 102 B1 offenbart eine biaxial orientierte Polypropylenfolie, die eine vakuolenhaltige Basisschicht aus Polypropylen-Homopolymer mit einer Zwischenschicht aus Vakuolen-freiem Polypropylen-Homopolymer auf der einen Oberfläche und eine bedruckbare Außenschicht auf der Vakuolen-freien Polypropylen-Homopolymer-Zwischenschicht umfasst. Dabei ist die bedruckbare Außenschicht aus einem Polyolefin-Mischpolymerisat gebildet, das aus Ethylen-, Propylen-, But-1-en- und höheren α-Olefinen Einheiten aufgebaut ist. Darüber hinaus befindet sich auf, der der Vakuolen-freien Zwischenschicht gegenüberliegenden Oberfläche, noch mindestens eine weitere Polymerschicht, deren Außenoberfläche matt ist und eine Mischung von inkompatiblen Polymeren umfasst. Weiterhin enthält die Innenschicht und/oder die Vakuolen-freie Schicht Titandioxid. Die Folie dieser Druckschrift wird u. a. zum In-Mould-Etikettieren eingesetzt.

EP 0 862 991 B1 betrifft die Verwendung eines Etiketts als In-Mould-Etikett, das aus einer biaxial orientierten Polymerfolie hergestellt ist, die eine Kernschicht aus einem Vakuolen-haltigen Propylen-Homopolymer mit einer Dichte von bis zu 0,70 g/cm³ auf jeder Oberfläche der Kernschicht mindestens eine im Wesentlichen nicht Vakuolen-haltige Schicht aufweist. Das Verhältnis der kombinierten Schichtdicken der Zwischenschichten und/oder Deckschichten auf den jeweiligen Oberflächen der Kernschicht beträgt zwischen 2:1 und 1:1.

WO 2009/010178 A1 beschreibt die Verwendung einer mehrschichtigen, opaken, biaxial-orientierten Polyolefinfolie aus einer Vakuolen-haltigen Basisschicht und mindestens einer inneren Deckschicht als In-Mould-Etikett bei Tiefziehen. Dabei umfasst die Deckschicht mindestens 30 - 95 Gew.-% eines Co- und/oder Terpolymeren I mit einem Siegelanspringtemperatur I von 70 - 105°C und 5 bis 70 Gew.-% eines unverträglichen Polyethylens, wobei sich die Angaben in Gew.-% jeweils auf das Gewicht der inneren Deckschicht beziehen. Die Siegelanspringtemperatur II der inneren Deckschicht soll in diesem Zusammenhang im Bereich von 80 bis 110°C liegen.

WO 2014/009010 A1 beschreibt eine opake mehrschichtige biaxial orientierte Polypropylenfolie, welche mindestens eine vakuolenhaltige Basisschicht und eine bedruckbare äußere Deckschicht und eine innere matte Deckschicht umfasst, wobei die innere Deckschicht mindestens zwei inkompatible Polymere enthält und eine Oberflächenrauheit Rz von mindesten 2,0 pm bei einem Cut off von 0,25mm aufweist, dadurch gekennzeichnet, daß die innere matte Deckschicht ein Polydialkylsiloxan enthält, welches eine Viskosität von 5.000 bis 1 000.000 mm2 /s aufweist und die Oberfläche dieser inneren Deckschicht mittels Corona oberflächenbehandelt ist.

Des Weiteren sind im Stand der Technik Verpackungsfolien, insbesondere transparente Verpackungsfolien, bekannt, welche zur Verbesserung der Gleitreibung mit Polydialkylsiloxanen in der oder den Deckschichten modifiziert werden. Diese Modifizierung verbessert den Reibungskoeffizienten der Folie, so dass diese Folien bei der Herstellung und beim Verarbeiten besser auf- und abgewickelt werden können. Dieses Wickelverhalten ist eine kritische Eigenschaft, da im Bereich der Verpackungsfolien, die Verarbeitung direkt von der Rolle erfolgt, in dem beim Abwickeln ein entsprechender Beutel geformt, gefüllt und verschlossen wird. Zuschnitte oder Bögen gibt es im Bereich der Verpackungsfolien nicht. Auch die Bedruckung erfolgt gegebenenfalls derart, dass die Folienrolle in eine Druckmaschine eingehängt und abgewickelt wird, durch die Druckmaschine läuft und als bedruckte Folie wieder aufgewickelt wird. Die bedruckte Folienrolle wird dann an der Packmachine eingehängt und wie oben beschrieben zu einer Verpackung verarbeitet.

Der Zusatz von Polydialkylsiloxanen begünstigt ein reibungsloses Verarbeiten der Folienrollen, wenn gleich auch einige Eigenschaften der Folien negativ beeinflusst werden. So ist von mit Polydialkylsiloxanen modifizierten Folien der so genannte Abklatsch-Effekt bekannt, welcher zu einer, meist unerwünschten, Übertragung des Polydialkylsiloxans auf die gegenüberliegende Folienoberfläche führt. Hier beeinträchtigt Polydialkylsiloxan die Bedruckbarkeit und die Siegelfähigkeit der Folien. Des Weiteren sind im Stand der Technik Wechselwirkungen zwischen einer Polydialkylsiloxan-haltigen Deckschicht und Corona-Behandlungen bekannt. So beschreibt die US5945225, dass die Corona-Behandlung einer Polydialkylsiloxan-haltigen Deckschicht die Siegelfähigkeit der Folie so stark beeinträchtigt, dass sie nicht mehr als Verpackungsfolie verwendet werden kann. Diese Schrift lehrt, dass der Zusatz von Kohlenwasserstoff-Harzen (hard resins) den negativen Effekt ausgleichen kann.

Die EP 2528737 macht sich diesen an sich bekannten Effekt positiv zunutze und lehrt die Verwendung einer mit Polydialkylsiloxan modifizierten Folie in Verbindung mit Kaltsiegelklebern. Die Corona behandelte Polydialkylsiloxan-haltige Deckschicht bildet eine Release Schicht gegenüber dem Kaltsiegelkleber ohne die Eigenschaften des Kaltsiegelklebers zu beeinträchtigen. Auch in dieser Schrift werden nur transparente Folien für Verpackungen erwähnt.

Es war Aufgabe der vorliegenden Erfindung eine Folie zur Verfügung zu stellen, welche vorteilhaft im Bogendruckverfahren mit hoher Geschwindigkeit bedruckt werden kann und die nach Stapelung der bedruckten Bögen zuverlässig entstapelt werden kann. Die Vereinzelung der bedruckten Bögen soll zuverlässig und störungsfrei funktionieren. Es soll keine Übertragung von Druckfarbe und/oder Überlack auf die gegenüberliegende unbedruckte äußere Oberfläche erfolgen. Alle diese Anforderungen sollen insbesondere auch bei Bedruckungen mit hoher Geschwindigkeit erfüllt werden, damit auch beim Stapeln von bedruckten Bögen mit feuchter oder nicht vollständig ausgehärteter Farben und/oder Überlacken kein Übertrag erfolgt.

Die übrigen Anforderungen im Hinblick auf die Verwendung als In-Mould-Etikett dürfen dabei nicht beeinträchtigt werden, d.h. die Folie muss gleichzeitig eine gute Bedruckbarkeit auf ihrer Außenseite aufweisen und in dem Bogendruckverfahren grundsätzlich gut laufen, d.h. problemlose Unterschuppung aber kein Verschießen der Bögen und das bedruckte Etikett muss eine gute Haftung zum Container ausbilden, und als einzelnes Etikett eine gute Stapelbarkeit und Entstapelbarkeit aufweisen.

Diese Aufgabe wird gelöst durch eine opake, mehrschichtige, biaxial orientierte Polypropylenfolie aus einer Basisschicht und einer äußeren Deckschicht und einer inneren matten Deckschicht, wobei diese innere Deckschicht mindestens zwei inkompatible Polymere enthält und eine Oberflächenrauheit Rz von mindesten 2,0µm bei einem cut off von 0,25mm aufweist und wobei diese innere matte Deckschicht ein Polydialkylsiloxan enthält, welches eine Viskosität von 100.000 bis 500.000 mm²/s aufweist und die Oberfläche dieser inneren matten Deckschicht mittels Corona oberflächenbehandelt ist.

Die Unteransprüche geben bevorzugte Ausführungsformen der Erfindung an.

Nachfolgend wird als innere Oberfläche oder innere Deckschicht diejenige Oberfläche oder Deckschicht der Etikettenfolie bezeichnet, welche sich nach dem Etikettieren im Kontakt mit dem Behälter befindet. Die äußere Oberfläche oder äußere Deckschicht ist entsprechend die gegenüberliegende Oberfläche oder die gegenüberliegende Deckschicht der Folie, welche bedruckt wird und nach dem Etikettieren sichtbar ist.

Im Rahmen der vorliegenden Erfindung wurde gefunden, dass die erfindungsgemäße Polypropylenfolie mit einer matten inneren Deckschicht in Form bedruckter Bögen sehr gut gestapelt werden kann und dass die Entstapelung problemlos möglich ist, auch wenn die Farbe der Bögen beim Stapeln noch feucht oder unvollständig ausgehärtet ist, wenn diese matte, innere, unbedruckte Deckschicht ein ausgewähltes Polydialkylsiloxan mit einer Viskosität im Bereich von 100.000 bis 500.000 mm²/s enthält und wenn die Oberfläche dieser innere Deckschicht einer Corona- oder Flamm-Behandlung unterworfen wurde. Überraschenderweise erfolgt unter verschiedensten Einsatzbedingungen kein Farbübertrag, so dass die entstapelten bedruckten Bögen frei von Farbübertragungen auf der inneren Oberfläche sind und das Druckbild auf der Außenseite unbeschädigt bleibt.

Die Folie weist eine sehr gute Unterschuppung der Bögen im Druckprozess ohne Verrutschen oder Verschießen der geschuppten Bögen auf. Die unbedruckte innere Oberfläche des Bogens gleitet problemlos gegen die unbedruckte äußere Oberfläche des Bogens, auch bei großformatigen Bögen. Der neu abgeschlagene Bogen lässt sich unter den vorher abgeschlagenen Bogen führen, wobei die Weiterführung der aufgereihten unterschuppten Bögen nicht behindert wird. Die Eigenschaften der erfindungsgemäßen Folie tragen zu einem reibungslosen Bedrucken der großformatigen Bögen bei, wodurch die Druckgeschwindigkeit in diesem Druckprozess weiter erhöht werden kann. Überraschenderweise treten auch bei diesen erhöhten Druckgeschwindigkeiten keine Probleme beim Stapeln und Entstapeln der bedruckten Bögen durch Verklebungen oder Farbübertrag auf.

Auch die übrigen Eigenschaften für die Verwendung der Folie als In-Mold Etikett sind nicht beeinträchtigt. Die Folie ist auf der äußeren Oberfläche mit verschiedensten Farben gut bedruckbar und das bedruckte Etikett lässt sich selbst ebenfalls gut stapeln und vereinzeln und die Haftung gegen den Behälter wird nicht beeinträchtigt. Im Ergebnis wird eine Folie zur Verfügung gestellt, welche mit sehr hohen Geschwindigkeiten zum Etikett verarbeitet werden kann und am Ende zu einem einwandfrei etikettierten optisch ansprechenden Behälter führt.

Im Rahmen der vorliegenden Erfindung wurde gefunden, dass der Zusatz eines ausgewählten Polydialkylsiloxans mit einer Viskosität im Bereich von 100.000 bis 500.000 mm²/s in der matten inneren Deckschicht in Verbindung mit der Corona- oder Flamm-Behandlung dieser matten inneren Deckschicht wesentlich für die Erfindung ist. Es wurde gefunden, dass andere übliche Gleitmittel nicht die gewünschte Wirkung entfalten oder andere wichtige Folieneigenschaften nachteilig beeinflussen. So kann durch den Zusatz von Säureamiden das Gleitverhalten nicht so eingestellt werden, dass die Folie im Prozess stabil läuft. Aber auch andere Maßnahmen, wie die Variierung der Oberflächenrauheit der inneren und äußeren Oberfläche führten zu keinen befriedigenden Ergebnissen. Insbesondere können mit diesen Maßnahmen nicht die gewünschten Verlässlichkeit im Druckprozess erreicht werden. Durch den Zusatz von Erucasäureamiden kann zwar ein niedriger Reibungskoeffizient eingestellt werden, aber dennoch kommt es in gewissen Zeitabständen immer wieder zu den bekannten Problemen. Beispielsweise haften die Bögen derart aneinander, dass die bedruckten Bögen nicht sauber vereinzelt werden können. Dies wird auf das Migrationsverhalten von Säureamiden zurückgeführt, welches von den äußeren Bedingungen abhängt und zu schwankenden Folieneigenschaften je nach Temperatur und Alter der Folie führt. Ähnlich ist auch die Optimierung der Rauheit nicht so stabil und reproduzierbar möglich, da diese Werte bei einzelnen Produktionschargen im üblichen Rahmen schwanken. Variationen der Rauheiten konnten auch das Problem der Farbübertragung nicht lösen.

Im Rahmen der vorliegenden Erfindung wurde gefunden, dass der Reibungskoeffizient, wie er üblicherweise bei Verpackungsfolien gemessen wird, nur bedingt ein Maß für die Entstapelbarkeit von bedruckten Bögen ist. Trotz niedrigem Reibungskoeffizient der unbedruckten Folie, beispielsweise durch den Einsatz von Eurcasäureamiden als Gleitmittel in der inneren Deckschicht, treten die beschriebenen Probleme sehr viel häufiger auf.

Überraschenderweise werden mit dem ausgewählten Polydialkylsiloxan in der matten inneren Deckschicht, welche zusätzlich Corona- oder Flamm-behandelt ist, Eigenschaften erzielt, die im Bogendruckprozess zu einem störungsfreien Verhalten der Bögen führen, so dass die Druckgeschwindigkeit erhöht werden kann, ohne dass Probleme beim Entstapeln der bedruckten Bögen oder Farbübertragungen auftreten. Gegenüber den anderen Modifikationen, die getestet wurden, sind diese erzielten Eigenschaften äußerst stabil und werden nicht durch äußere Bedingungen beeinflusst. Auch wenn gewisse Schwankungen im Produktionsprozess bei der Herstellung der Folie auftreten oder die äußeren Bedingungen bis zur Verarbeitung unterschiedlich sind, hat die Folie stabile Eigenschaften. Die erfindungsgemäße Folie kann zuverlässig zum Etikett verarbeitet werden, auch wenn die Folienqualität selbst gewissen Schwankungen unterliegt, beispielsweise die Rauheit leicht erhöht oder erniedrigt ist.

Damit kann eine Folie zur Verfügung gestellt werden, die besonders störungsfrei im Bogendruckverfahren mit hohen Taktzahlen bedruckt werden kann. Auch wenn die Folienqualität selbst oder die Qualität der Druckfarben gewissen Schwankungen unterliegen, muß der Prozess beim Bedrucken der Bögen, bei der Führung der geschuppten Bögen, beim eigentlichen Bedrucken und beim Stapeln und Entstapeln der bedruckten Bögen nicht angepasst werden.

Überraschenderweise zeigen sich auch keine Beeinträchtigungen der übrigen relevanten Eigenschaften. Die Etikettenfolie lässt sich auf der Außenseite gut bedrucken und überraschenderweise wird die Haftung der modifizierten Innenseite gegenüber dem Behälter nicht beeinträchtigt. Es gab hinsichtlich dieser Haftungseigenschaften ernsthafte Bedenken, da beispielsweise in der US5945225 derartig modifizierte Deckschichten als "Release-Schichten" beschrieben werden, die eine hohe Trennkraft gegenüber anderen Oberflächen aufweisen soll.

Die matte innere Deckschicht der Etikettenfolie muss erfindungsgemäß Polydialkylsiloxan mit einer Viskosität im Bereich von 100.000 bis 500.000 mm²/s enthalten und zusätzlich mit Corona oder Flamme oberflächenbehandelt werden, um die gewünschten Verbesserungen sicherzustellen. Ohne die Corona- oder Flammbehandlung oder wenn die Viskosität geringer ist, kommt es zu einer Übertragung des Polydialkylsiloxan auf die gegenüberliegende äußere Oberfläche und die Bedruckbarkeit der äußeren Oberfläche wird beeinträchtigt.

Es ist darüber hinaus bekannt, dass sich Bedruckbarkeit durch eine Plasma-, Corona- oder Flamm-Behandlung deutlich verbessert. Es wurde daher erwartet, dass die Corona- oder Flammbehandlung der matten inneren Deckschicht zu einer häufigeren Übertragung der Druckfarbe von der Außenseite auf die Innenseite führen würde, zumindest ein stärkeres Verkleben von äußere gegen innere Oberfläche im Bogen- oder Etikettenstapel auftreten würde. Überraschenderweise zeigt sich bei der erfindungsgemäßen Folie kein vermehrtes Verkleben der matten behandelten Oberfläche gegenüber der bedruckten äußeren Oberfläche, sowohl bei den bedruckten Bögen als auch bei den gestapelten Etiketten, vielmehr wird überraschend eine verbesserte stabilere Trennbarkeit der Bögen ohne Farbübertragung erreicht.

Es wurde überraschenderweise gefunden, dass die erfindungsgemäße Folie mit dem ausgewählten Polydialkylsiloxan in der matten Deckschicht nicht nur trotz, sondern sogar durch Coronabehandlung sehr gute Trenn-Eigenschaften aufweist.

Es wurde des Weiteren gefunden, dass bei der erfindungsgemäßen Folie mit Polydialkylsiloxan in der inneren Deckschicht weder die Bedruckbarkeit der äußeren Oberfläche der Etikettenfolie und auch nicht die Haftung des Etikettes gegenüber dem Behälter beeinträchtigt sind. Es im Stand der Technik bekannt ist, dass Polysiloxane bei Kontakt mit einer gegenüberliegenden Oberfläche auf diese übertragen werden. Dieses Phänomen wird auch als Abklatsch-Effekt beschrieben. Es war daher zu erwarten, dass die Polysiloxane beim Aufwickeln der Folie unmittelbar nach ihrer Herstellung auf die gegenüberliegende äußere Oberfläche übertragen werden und dadurch die Bedruckbarkeit dieser äußeren Oberfläche beeinträchtigt würde. Dies ist jedoch bei den erfindungsgemäßen Folien nicht der Fall.

Die Folie zeigt nach der Oberflächen-Behandlung der matten inneren Deckschicht, welche das ausgewählte Polydialkylsiloxan mit einer Viskosität von 100.000 bis 500.000 mm²/s enthält, sehr gute und stabile Eigenschaften. Die Folie kann auf der gegenüberliegenden äußeren Oberfläche im Bogendruck bei unterschiedlichsten Bedingungen und trotz gewisser Schwankung der Rauheit sehr gut bedruckt werden und diese Eigenschaften sind zeitlich direkt nach der Produktion gewährleistet und über einen langen Zeitraum von mehreren Monaten stabil.

In einer bevorzugten Ausführungsform ist die Etikettenfolie eine fünfschichtige Folie, welche auf beiden Oberflächen der Basisschicht Zwischenschichten aufweist. Auf der äußeren Zwischenschicht ist die bedruckbare äußere Deckschicht und auf der gegenüberliegenden inneren Zwischenschicht ist die erfindungsgemäße matte innere Deckschicht aufgebracht. Die Oberflächenbehandlung der matten inneren Deckschicht erfolgt mittels Corona oder Flamme. Gegebenenfalls kann zur Verbesserung der Bedruckbarkeit auch die Oberfläche der zweiten äußeren Deckschicht behandelt werden. Die Oberflächenbehandlung der äußeren Deckschicht kann mittels Corona, Flamme oder Plasma erfolgen.

Die Basisschicht der Folie enthält mindestens 70 Gew. %, vorzugsweise 75 bis 99 Gew. %, insbesondere 80 bis 98 Gew. %, jeweils bezogen auf das Gewicht der Basisschicht Propylenpolymere und höchstens 30 Gew.-%, vorzugsweise 1 bis 25 Gew.-%, insbesondere 2 bis 20 Gew.-% vakuoleninitierende Füllstoffe, sowie gegebenenfalls weitere übliche Additive in jeweils wirksamen Mengen.

Im Allgemeinen enthält das Propylenpolymer mindestens 90 Gew. %, vorzugsweise 94 bis 100 Gew. %, insbesondere 98 bis <100 Gew. %, Polypropyleneinheiten. Der entsprechende Comonomergehalt von höchstens 10 Gew. % bzw. 0 bis 6 Gew. % bzw. >0 bis 2 Gew. % leitet sich, wenn vorhanden, im Allgemeinen von Ethylen ab. Die Angaben in Gew. % beziehen sich jeweils auf das Propylenpolymer.

Bevorzugt sind isotaktische Propylenhomopolymere mit einem Schmelzpunkt von 140 bis 170°C, vorzugsweise von 150 bis 165°C, und einem Schmelzflußindex (Messung ISO 1133 bei 2,16 kg Belastung und 230°C) von 1,0 bis 10 g/10 min, vorzugsweise von 1,5 bis 6,5 g/10 min. Der n-heptanlösliche Anteil des Polymers beträgt im Allgemeinen 0,5 bis 10 Gew. %, vorzugsweise 2 bis 5 Gew.-%, bezogen auf das Ausgangspolymer. Die Molekulargewichtsverteilung des Propylenpolymers kann variieren. Das Verhältnis des Gewichtsmittels Mw zum Zahlenmittel Mn liegt im Allgemeinen zwischen 1 und 15, vorzugsweise bei 2 bis 10, ganz besonders bevorzugt bei 2 bis 6. Eine derartig enge Molekulargewichtsverteilung des Propylenpolymers der Basisschicht erreicht man beispielsweise durch dessen peroxidischen Abbau oder durch Herstellung des Polypropylens mittels geeigneter Metallocenkatalysatoren. Für die Zwecke der vorliegenden Erfindung sind auch hochisotaktische bzw. hochkristalline Polypropylene geeignet, deren Isotaktizität nach ¹³C-NMR (Triade) mindestens 95%, vorzugsweise 96 - 99% beträgt. Derartige hochisotaktische Polypropylene sind an sich im Stand der Technik bekannt und werden sowohl als HIPP als auch als HCPP bezeichnet.

Weiterhin umfasst die Basisschicht Vakuolen-initierende Füllstoffe, insbesondere in einer Menge von maximal 30 Gew.-%, vorzugsweise 1 bis 20 Gew.-%, insbesondere 2 bis 15 Gew.-%, bezogen auf das Gewicht der Basisschicht. Zusätzlich zu den Vakuolen-initierenden Füllstoffen kann die Basisschicht Pigmente enthalten, beispielsweise in einer Menge von 0,5 bis 10 Gew. %, vorzugsweise 1 bis 8 Gew.-%, insbesondere 1 bis 5 Gew.-%. Die Angaben beziehen sich jeweils auf das Gewicht der Basisschicht. Bei Zusatz von Pigmente erniedrigt sich der Anteil an Polymeren entsprechend. Bevorzugte Ausführungsformen enthalten jedoch keine Pigmente, d.h. <1 Gew.-%, insbesondere kein TiO₂, in der Basisschicht.

*"Pigmente"* sind im Sinne der vorliegenden Erfindung unverträgliche Teilchen, die im Wesentlichen nicht zur Vakuolenbildung beim Verstrecken der Folie führen. Die färbende Wirkung der Pigmente wird durch die Teilchen selbst verursacht. Pigmente haben im Allgemeinen einen mittleren Teilchendurchmesser von 0,01 bis maximal 1 µm, vorzugsweise 0,01 bis 0,7 µm, insbesondere 0,01 bis 0,4 µm. Pigmente umfassen sowohl sogenannte *"Weißpigmente",* welche die Folien weiß einfärben, als auch *"Buntpigmente"*, welche der Folie eine bunte oder schwarze Farbe verleihen. Übliche Pigmente sind Materialien, wie z.B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente, wie Calciumcarbonat, Siliciumdioxid, Titandioxid und Bariumsulfat, bevorzugt eingesetzt werden.

Die Titandioxidteilchen bestehen im Allgemeinen zu mindestens 95 Gew. % aus Rutil und werden bevorzugt mit einem Überzug aus anorganischen Oxiden und/oder aus organische Verbindungen mit polaren und unpolaren Gruppen eingesetzt. Derartige Beschichtungen des TiO₂ sind im Stand der Technik bekannt.

Im Sinne der vorliegenden Erfindung sind *"Vakuolen-initiierende Füllstoffe"* feste Teilchen, die mit der Polymermatrix unverträglich sind und beim Verstrecken der Folien zur Bildung von vakuolenartigen Hohlräumen führen, wobei Größe, Art und Anzahl der Vakuolen von der Größe und der Menge der festen Teilchen und den Streckbedingungen, wie Streckverhältnis und Strecktemperatur, abhängig sind. Die Vakuolen reduzieren die Dichte und geben den Folien ein charakteristisches perlmuttartiges, opakes Aussehen, welches durch Lichtstreuung an den Grenzflächen *"Vakuole*/*Polymermatrix"* entsteht. Die Lichtstreuung an den festen Teilchen selbst trägt zur Opazität der Folie im Allgemeinen vergleichsweise wenig bei. In der Regel haben die Vakuolen-initiierenden Füllstoffe eine Mindestgröße von 1 µm, um zu einer effektiven, d.h. opak machenden Menge an Vakuolen zu führen. Im Allgemeinen beträgt der mittlere Teilchendurchmesser der Teilchen 1 bis 6 µm, vorzugsweise 1,5 bis 5 µm. Der chemische Charakter der Teilchen spielt eine untergeordnete Rolle, sofern Unverträglichkeit vorliegt.

Übliche Vakuolen-initiierende Füllstoffe sind anorganische und/oder organische, mit Polypropylen unverträgliche Materialien, wie Aluminiumoxid, Aluminiumsulfat, Bariumsulfat, Calciumcarbonat, Magnesiumcarbonat, Silicate, wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymer der Basisschicht unverträglichen Polymere in Frage, insbesondere solche, wie HDPE, Copolymere von cyclischen Olefinen, wie Norbornen oder Tetracyclododecen, mit Ethylen oder Propylen, Polyester, Polystyrole, Polyamide, halogenierte organische Polymere, wobei Polyester, wie beispielsweise Polybutylenterephthalate, bevorzugt sind. *"Unverträgliche Materialien"* oder *"unverträgliche Polymere"* bezeichnen im Sinne der vorliegenden Erfindung solche Materialien oder Polymere, die in der Folie als separate Teilchen oder als separate Phase vorliegen.

Die Dichte der erfindungsgemäßen Folie kann je nach Zusammensetzung der Basisschicht in einem weiten Bereich variieren. Dabei tragen Vakuolen zu einer Erniedrigung der Dichte bei, wohingegen Pigmente, wie z.B. TiO₂ auf Grund des höheren spezifischen Gewichts die Dichte der Folie erhöhen. Vorzugsweise liegt die Dichte der Folie im Bereich von 0,4 bis 0,8 g/cm³, insbesondere im Bereich von 0,5 bis 0,75 g/cm³.

Zusätzlich kann die Basisschicht übliche Additive, wie Neutralisationsmittel, Stabilisatoren, Antistatika und/oder weitere Gleitmittel, in jeweils wirksamen Mengen enthalten. Die nachstehenden Angaben in Gew.-% beziehen sich jeweils auf das Gewicht der Basisschicht.

Bevorzugte Antistatika sind Glycerinmonostearate, Alkalialkansulfonate, polyethermodifizierte, insbesondere ethoxylierte und/oder propoxylierte, Polydiorganosiloxane (Polydialkylsiloxane, Polyalkylphenylsiloxane und dergleichen) und/oder die im Wesentlichen geradkettigen und gesättigten aliphatischen, tertiären Amine mit einem aliphatischen Rest mit 10 bis 20 Kohlenstoffatomen, die mit α-Hydroxy-(C₁-C₄)-alkyl-Gruppen substituiert sind, wobei N,N-Bis-(2-hydroxyethyl)-alkylamine mit 10 bis 20 Kohlenstoffatomen, vorzugsweise 12 bis 18 Kohlenstoffatomen, im Alkylrest besonders geeignet sind. Die bevorzugte Menge an Antistatikum liegt im Bereich von 0,05 bis 0,5 Gew.-%.

Als Gleitmittel eignen sich insbesondere höhere aliphatische Säureamide, höhere aliphatische Säureester, Wachse und Metallseifen. Die bevorzugte Menge an Gleitmittel liegt im Bereich von 0,01 bis 3 Gew.-%, vorzugsweise 0,02 bis 1 Gew. %. Besonders geeignet ist der Zusatz von höheren aliphatischen Säureamiden im Bereich von 0,01 bis 0,25 Gew. % in der Basisschicht. Ganz besonders geeignete aliphatische Säureamide sind Erucasäureamid und Stearylamid. Im Rahmen der vorliegenden Erfindung wurde gefunden, dass der Zusatz derartiger Gleitmittel, insbesondere auch der Zusatz von Säureamiden, das Gleitverhalten der Bögen nicht positiv beeinflusst, jedoch im Hinblick auf das Wickelverhalten der Folie vorteilhaft eingesetzt werden kann.

Als Stabilisatoren können die üblichen, stabilisierend-wirkenden Verbindungen für Ethylen-, Propylen- und andere Olefinpolymere eingesetzt werden. Deren Zusatzmenge liegt vorzugsweise zwischen 0,05 und 2 Gew.-%. Besonders geeignet sind phenolische und phosphitische Stabilisatoren, wie Tris-2,6-dimethylphenylphosphit. Phenolische Stabilisatoren mit einer Molmasse von mehr als 500 g/mol werden bevorzugt, insbesondere Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol. Dabei werden phenolische Stabilisatoren allein zweckmäßigerweise in einer Menge von 0,1 bis 0,6 Gew.-%, insbesondere 0,1 bis 0,3 Gew.-%, phenolische und phosphitische Stabilisatoren bevorzugt im Verhältnis 1 : 4 bis 2 : 1 und in einer Gesamtmenge von 0,1 bis 0,4 Gew.-%, insbesondere 0,1 bis 0,25 Gew.-%, eingesetzt.

Bevorzugte Neutralisationsmittel umfassen Dihydrotalcit, Calciumstearat und/oder Calciumcarbonat mit einer mittleren Teilchengröße von höchstens 0,7 µm, einer absoluten Teilchengröße von kleiner 10 µm und einer spezifischen Oberfläche von mindestens 40 m²/g. Im Allgemeinen werden 0,02 bis 0,1 Gew.-% zugesetzt.

Die erfindungsgemäße Folie umfasst mindestens eine innere Deckschicht und eine äußere Deckschicht. Die innere Deckschicht ist im Sinne der vorliegenden Erfindung diejenige Deckschicht, welche beim Etikettieren dem Behälter zugewandt ist und die Verbindung zwischen dem Behälter und dem Etikett bildet. Die innere Deckschicht befindet sich entweder in Kontakt mit der Basisschicht oder vorzugsweise in Kontakt mit der inneren Zwischenschicht. Die äußere Deckschicht ist im Sinne der vorliegenden Erfindung diejenige Deckschicht, welche beim Etikettieren dem Behältnis abgewandt ist und beim Etikettieren nach außen zeigt und am etikettierten Behälter sichtbar ist. Die äußere Deckschicht befindet sich im Allgemeinen in Kontakt mit der äußeren Zwischenschicht.

Die innere Deckschicht hat im Allgemeinen eine Dicke von 0,5 bis 5µm, vorzugsweise 0,8 bis 3µm. Die äußere Deckschicht hat im Allgemeinen eine Dicke von 0,5 bis 4µm, vorzugsweise 0,5 bis 2,5µm. Die innere Zwischenschicht hat im Allgemeinen eine Dicke von 1,5 bis 6µm, vorzugsweise 2 bis 4,5µm. Die äußere Zwischenschicht hat im Allgemeinen eine Dicke von 1 bis 5µm, vorzugsweise 1,5 bis 3,5µm. Die Gesamtdicke der Folie liegt vorzugsweise in einem Bereich von 30 bis 100µm, vorzugsweise in einem Beriech von 40 bis 60µm.

Die matte innere Deckschicht der Etikettenfolie enthält als wesentliche Bestandteile mindestens zwei inkompatible Polymere (A) und (B). Inkompatibel bedeutet im Sinne der vorliegenden Erfindung, daß die zwei Polymere zwei getrennte Phasen bilden und dadurch eine erhöhte Rauheit der Oberfläche erzeugen. Derartige matte Deckschichten aus inkompatiblen Polymeren sind an sich im Stand der Technik bekannt.

Im Allgemeinen ist die Deckschicht aus (A) Propylenhomopolymer, Co- und/oder Terpolymer aus Propylen, Ethylen und/oder Butylen-Einheiten und (B) Polyethylen aufgebaut. Im Allgemeinen enthält die innere Deckschicht mindestens 30 bis 95 Gew.-%, vorzugsweise 45 bis 85 Gew.-%, insbesondere 50 bis 80 Gew.-% der genannten Propylenpolymeren (A) und 5 bis 70 Gew.-%, vorzugsweise 15 bis 55 Gew.-%, insbesondere 20 bis 50 Gew.-% des Polyethylens (B), jeweils bezogen auf das Gewicht der innere Deckschicht.

Für die vorliegenden Zwecke besonders geeignete Propylencopolymere oder Propylenterpolymere enthalten überwiegend Propyleneinheiten und zusätzlich Ethylen-Einheiten und/oder Butylen-Einheiten, d.h. es sind insbesondere Propylen-Ethylencopolymere, Propylen-Butylencopoylmere oder Propylen-Ethylen-Butylenterpolymere. Die Zusammensetzung der Propylencopolymeren oder Propylenterpolymeren aus den jeweiligen Monomeren kann innerhalb der nachstehend beschriebenen Grenzen variieren. Im Allgemeinen enthalten die Propylenpolymere über 50 Gew.-% Polypropylen-Einheiten, weshalb sie auch als Propylen-Mischpolymerisate bezeichnet werden. Bevorzugte Propylen-Mischpolymerisate enthalten mindestens 60 Gew.-%, vorzugsweise 65 bis 97 Gew.-% Polypropylen-Einheiten und höchstens 40 Gew.-%, vorzugsweise 3 bis 35 Gew.-% Ethylen- oder Polybutylen-Comonomereinheiten. Weiterhin sind auch Terpolymere besonders vorteilhaft, die 65 bis 96 Gew.-%, vorzugsweise 72 bis 93 Gew.-% Polypropylen-Einheiten, und 3 bis 34 Gew.-%, vorzugsweise 5 bis 26 Gew.-% Polyethylen-Einheiten und 1 bis 10 Gew.-%, vorzugsweise 2 bis 8 Gew.-% Polybutylen-Einheiten umfassen.

Der Schmelzindex der Propylencopolymeren oder Propylenterpolymeren beträgt im Allgemeinen 0,1 bis 20 g/10 min (230°C, 2,16 kg), vorzugsweise 0,1 bis 15 g/10 min. Der Schmelzpunkt kann im Allgemeinen in einem Bereich von 70 bis 140°C liegen. In einer bevorzugten Ausführungsform werden Propylencopolymere und/oder Propylenterpolymere eingesetzt, deren Schmelzpunkt mindestens 105 bis 140°C, vorzugsweise 110 bis 135°C beträgt.

Geeignete Propylenhomopolymere sind solche, die bereits vorstehend für die Basisschicht beschrieben sind und können der inneren Deckschicht ebenfalls zugesetzt werden, wobei der Anteil an Propylenhomopolymer im Allgemeinen nicht >50 Gew.-% bezogen auf das Gewicht der inneren Deckschicht, liegen sollte.

Gegebenenfalls können die vorstehend genannten Propylenpolymere untereinander gemischt werden. Hierbei können die Anteile in beliebigen Grenzen variiert werden. Diese Mischungen werden dann in den vorstehend, für die Propylenpolymeren, beschriebenen Mengen in der Deckschicht eingesetzt.

Für Folien, die als In-Mold Etiketten im Tiefziehverfahren eingesetzt werden sollen, sind Propylencopolymere und/oder Propylenterpolymere mit einer niedrigen Siegelanspringtemperatur (SIT) für die innere Deckschicht bevorzugt. Sowohl diese niedrig-siegelnden Propylenpolymeren als auch die Zusammensetzung solcher niedrig-siegelnden inneren Deckschichten sind ausführlich in der WO 2009/0101178, Seite 9, Zeile 19 bis Seite 13, Zeile 12 beschrieben. Auf diese Offenbarung wird hiermit ausdrücklich Bezug genommen.

Für die Tiefziehetiketten sind somit solche Propylencopolymere und/oder Propylenterpolymere bevorzugt, die eine Siegelanspringtemperatur I von 70 - 105°C, vorzugsweise 75 bis 100°C, aufweisen. Die Anteile dieser niedrigsiegelnden Co- und/oder Terpolymeren I und Polyethylen in der inneren Deckschicht sollten in diesem Fall so gewählt werden, daß die Siegelanspringtemperatur der inneren Deckschicht 110°C nicht überschreitet, vorzugsweise im Bereich von 80 - 110°C liegt.

Die zweite wesentliche Komponente der inneren Deckschicht ist mindestens ein Polyethylen, welches mit den vorstehend beschriebenen Propylenpolymeren unverträglich ist. Solche inkompatiblen Mischungen aus Propylenpolymeren und Polyethylenen sind an sich im Stand der Technik bekannt. Die Mischungen aus den Propylenpolymeren und den unverträglichen Polyethylenen erzeugen eine Oberflächenrauheit, die der Oberfläche der inneren Deckschicht grundsätzlich eine matte Optik verleiht. *"Unverträglich"* bedeutet somit im Sinne dieser Erfindung, dass durch die Mischung des Propylenpolymers mit dem Polyethylen eine Oberflächenrauheit gebildet wird. Die Oberflächenrauheit Rz der inneren Deckschicht aus inkompatiblen Polymeren liegt im Allgemeinen in einem Bereich von 2,0 - 6 µm, vorzugsweise 2,5 - 4,5 µm, bei einem Cut-off von 0,25 mm.

Geeignete unverträgliche Polyethylene sind beispielsweise HDPE oder MDPE. Das HDPE weißt im Allgemeinen die nachstehend beschriebenen Eigenschaften auf, beispielsweise einen MFI (21,6 kg/190°C) von größer 1 bis 50 g/10 min, vorzugsweise 1,5 bis 30 g/10 min, gemessen nach ISO 1133 und eine Viskositätszahl, gemessen nach DIN 53 728, Teil 4, oder ISO 1191, im Bereich von 100 bis 450 cm³/g, vorzugsweise 120 bis 280 cm³/g. Die Kristallinität beträgt im Allgemeinen 35 bis 80 %, vorzugsweise 50 bis 80 %. Die Dichte, gemessen bei 23°C nach DIN 53 479, Verfahren A, oder ISO 1183, liegt vorzugsweise im Bereich von >0,94 bis 0,96 g/cm³. Der Schmelzpunkt, gemessen mit DSC (Maximum der Schmelzkurve, Aufheizgeschwindigkeit 20°C/min), liegt vorzugsweise zwischen 120 und 140°C. Geeignetes MDPE hat im Allgemeinen einen MFI (21,6 kg/190°C) von größer 0,1 bis 50 g/10 min, vorzugsweise 0,6 bis 20 g/10 min, gemessen nach ISO 1133. Die Dichte, gemessen bei 23°C nach DIN 53 479, Verfahren A, oder ISO 1183, liegt vorzugsweise im Bereich von >0,925 bis 0,94 g/cm³. Der Schmelzpunkt, gemessen mit DSC (Maximum der Schmelzkurve, Aufheizgeschwindigkeit 20°C/min), liegt vorzugsweise zwischen 115 und 135°C, vorzugsweise 115 bis 130°C.

Gegebenenfalls kann die innere Deckschicht weitere olefinische Polymere in geringen Mengen enthalten, soweit dadurch nicht die wesentlichen Folieneigenschaften beeinträchtigt werden.

Erfindungsgemäß enthält die innere Deckschicht mindestens ein Polydialkylsiloxan mit einer Viskosität von 100.000 bis 500.000 mm²/s. Die Polydialkylsiloxan-Menge in der inneren Deckschicht liegt im Allgemeinen in einem Bereich von 0,5 bis 5 Gew.-%, vorzugsweise 0,8 - 3 Gew.-%, bezogen auf das Gewicht der inneren Deckschicht. Die übrigen Schichten, insbesondere die zweite äußere Deckschicht, enthalten/enthält kein Polydialkylsiloxan.

Polydialkylsiloxane sind Polymere bei denen unverzweigte Ketten wechselweise aus aufeinanderfolgenden Silizium und Sauerstoffatomen aufgebaut sind und an den Siliziumatomen je zwei Alkylgruppen aufweisen. Die endständigen Siliziumatome der Ketten weisen drei Alkylgruppen auf. Alkylgruppen sind beispielsweise Alkylgruppen mit 1 bis 5 C-Atomen, wobei Methylgruppen, d.h. Polydimethylsiloxane, bevorzugt sind. Polydialkylsiloxane weisen dementsprechend keine weiteren funktionellen Gruppen auf. Erfindungsgemäß werden Polydialkylsiloxane eingesetzt deren Viskosität 100.000 bis 500.000 mm²/s, vorzugsweise 150.000 bis 400.000 mm²/s, insbesondere 250.000 bis 350.000 mm²/s beträgt. Die Viskosität hängt mit der Kettenlänge und dem Molekulargewicht der Siloxane zusammen. Beispielsweise haben Siloxane mit einer Viskosität von mindesten 100.000 mm²/s im Allgemeinen ein Molekulargewicht von mindesten 100.000 und eine Kettenlänge von über 14.000 Siloxaneinheiten.

Die Oberfläche der inneren Deckschicht wird erfindungsgemäß einer Corona- oder Flammbehandlung unterworfen. Diese Behandlung verändert überraschenderweise die Eigenschaften der Siloxan-haltigen Deckschicht derart, dass sowohl die gewünschten Trenn-Eigenschaften als auch eine gute Haftung gegenüber dem Behälter als auch eine gute Bedruckbarkeit auf der Außenseite der Etikettenfolie gegeben ist. Einzelheiten zu der Corona- oder Flammbehandlung werden nachstehend bei der Beschreibung des Herstellverfahrens angegeben.

Gegebenenfalls kann die innere Deckschicht zusätzlich zu dem genannten inkompatiblen Polymeren und dem erfindungswesentlichen Polydialkylsiloxan übliche Additive in jeweils wirksamen Mengen, sowie weitere Polymere in geringen Mengen (0 bis <5 Gew.-%) enthalten, soweit diese Zusätze die erfindungswesentlichen Eigenschaften der Folie nicht beeinträchtigen.

Dies sind beispielsweise die zum Teil vorstehend beschriebenen Additive, wie Neutralisationsmittel, Stabilisatoren, Antistatika und/oder Antiblockmittel. Die jeweiligen Angaben in Gew.-% beziehen sich auf das Gewicht der inneren Deckschicht.

Besonders geeignete Antiblockmittel sind anorganische Zusatzstoffe, wie Siliciumdioxid, Calciumcarbonat, Magnesiumsilicat, Aluminiumsilicat, Calciumphosphat und dergleichen und/oder unverträgliche organische Polymerisate, wie Polyamide, Polyester, Polycarbonate und dergleichen, oder vernetzte Polymere, wie vernetztes Polymethylmethacrylat oder vernetzte Siliconöle. Siliciumdioxid und Calciumcarbonat sind bevorzugt. Die mittlere Teilchengröße liegt vorzugsweise zwischen 1 und 6 µm, insbesondere 2 und 5 µm. Die bevorzugte Menge an Antiblockmittel liegt im Bereich von 0,05 bis 5 Gew.-%, vorzugsweise 0,1 bis 3 Gew.-%, insbesondere 0,2 bis 2 Gew.-%.

Die erfindungsgemäße Polyolefinfolie weist eine zweite, äußere Deckschicht auf der, der inneren Deckschicht gegenüberliegenden, Seite auf, Die äußere Deckschicht sollte eine gute Haftung gegenüber üblichen Druckfarben, haben. Diese äußere Deckschicht kann auf der Oberfläche der Basisschicht aufgebracht sein. Bevorzugt weißt die Folie jedoch eine äußere Zwischenschicht auf, so dass die äußere Deckschicht auf der Oberfläche der äußeren Zwischenschicht aufgebracht ist. Zur weiteren Verbesserung der Bedruckbarkeit wird auf der Oberfläche der äußeren Deckschicht eine Corona-, Plasma- oder Flammbehandlung durchgeführt.

Die äußere Deckschicht ist im Allgemeinen aus Polymeren aus Olefinen mit 2 bis 10 Kohlenstoffatomen aufgebaut. Die äußere Deckschicht enthält im allgemeinen 95 bis 100 Gew.-% Polyolefin, vorzugsweise 98 bis <100Gew.-% Polyolefin, jeweils bezogen auf das Gewicht der Deckschicht/en.

Bevorzugte olefinische Polymere der äußeren Deckschicht/en sind Propylenhomopolymere, Propylenco- oder Propylenterpolymere II aus Ethylen-, Propylen- und/oder Butyleneinheiten oder Mischungen aus den genannten Polymeren. Diese Co- oder Terpolymere II enthalten keine Carbonsäuremonomeren (bzw. Ester davon). Es sind Polyolefine. Hierunter sind bevorzugte Polymere statistische Ethylen-Propylen-Copolymere mit einem Ethylengehalt von 1 bis 10 Gew.-%, bevorzugt 2,5 bis 8 Gew.-%, oder statistische Propylen-Butylen-1-Copolymere mit einem Butylengehalt von 2 bis 25 Gew.-%, bevorzugt 4 bis 20 Gew.-%, oder statistische Ethylen-Propylen-Butylen-1-Terpolymere mit einem Ethylengehalt von 1 bis 10 Gew.-% und einem Butylen-1-Gehalt von 2 bis 20 Gew.-%, oder eine Mischung oder ein Blend aus Ethylen-Propylen-Butylen-1-Terpolymeren und Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%. Die Angaben in Gew.-% beziehen sich jeweils auf das Gewicht des Polymeren.

Die in der äußeren Deckschicht eingesetzten vorstehend beschriebenen Propylenco- und/oder Propylenterpolymeren II weisen im allgemeinen einen Schmelzflußindex von 1,5 bis 30 g/10 min, vorzugsweise von 3 bis 15 g/10 min, auf. Der Schmelzpunkt liegt im Bereich von 120 bis 145 °C. Das vorstehend beschriebene Blend aus Co- und Terpolymeren II hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Diese vorstehend beschriebenen Ausführungsformen zeigen auf der äußeren Oberfläche einen Glanz von 15 bis 40 (bei einem Winkel von 20°C)

In einer weiteren Ausführungsform kann die äußere Deckschicht analog wie für die innere Deckschicht beschrieben zusätzlich ein unverträgliches Polymer enthalten und somit eine matte und rauhe Oberfläche aufweisen.

Diese matte äußere Deckschicht ist aus den vorstehend beschriebenen Propylenhomopolymeren oder Co- und/oder Terpolymeren aus Propylen, Ethylen und/oder Butylen-Einheiten (A) und Polyethylen (B) aufgebaut. Im Allgemeinen enthält die äußere Deckschicht mindestens 30 bis 95 Gew.-%, vorzugsweise 45 bis 85 Gew.-%, insbesondere 50 bis 80 Gew.-% der genannten Propylenpolymeren (A) und 5 bis 70 Gew.-%, vorzugsweise 15 bis 55 Gew.-%, insbesondere 20 bis 50 Gew.-% des Polyethylens (B), jeweils bezogen auf das Gewicht der äußeren Deckschicht.

Für die äußere Deckschicht gilt in analoger Weise, dass die Mischung aus den Propylenpolymeren und den unverträglichen Polyethylenen eine Oberflächenrauheit erzeugt, die der Oberfläche der äußeren Deckschicht eine matte Optik verleiht. Die Oberflächenrauheit Rz der matten äußeren Deckschicht aus inkompatiblen Polymeren liegt im Allgemeinen in einem Bereich von 2,0 - 6 µm, vorzugsweise 2,5 - 4,5 µm, bei einem Cut-off von 0,25 mm.

Geeignete unverträgliche Polyethylene sind im Zusammenhang mit der inneren Deckschicht ausführlich beschrieben. Diese Polyethylene sind in gleicher Weise für die matte äußere Deckschicht geeignet.

Gegebenenfalls können der äußeren Deckschicht die vorstehend beschriebenen Additive wie Antistatika, Neutralisationsmittel, Antiblockmittel und/oder Stabilisatoren, zugesetzt werden. Die Angaben in Gew.-% beziehen sich dann entsprechend auf das Gewicht der Deckschicht. Die äußere Deckschicht enthält kein Polydialkylsiloxan. Es ist kein Polydialkylsiloxan inkorporiert und es befindet sich kein Polydialkylsiloxan auf der Oberfläche der äußeren Deckschicht, welches von der inneren Oberfläche übertragen wurde.

Geeignete Antiblockmittel sind bereits im Zusammenhang mit der inneren Deckschicht beschrieben. Diese Antiblockmittel sind auch für die äußere Deckschicht geeignet. Die bevorzugte Menge an Antiblockmittel liegt für die äußere Deckschicht im Bereich von 0,1 bis 2 Gew.-%, vorzugsweise 0,1 bis 0,8 Gew.-%.

In einer besonders bevorzugten Ausführungsform wird die Oberfläche der äußeren Deckschicht Corona-, Plasma- oder Flamm-behandelt. Diese Behandlung verbessert die Hafteigenschaften der Folienoberfläche für eine anschließende Dekoration und Bedruckung, d.h. die Benetzbarkeit mit und Haftung von Druckfarben zu gewährleisten.

Im Allgemeinen umfasst die erfindungsgemäße Folie eine innere Zwischenschicht, die zwischen der Basisschicht und der inneren Deckschicht angeordnet ist, und eine äußere Zwischenschicht, die zwischen der Basisschicht und der äußeren Deckschicht angeordnet ist. Die innere Zwischenschicht befindet sich in Kontakt mit der inneren Deckschicht, die äußere Zwischenschicht befindet sich in Kontakt mit der äußeren Deckschicht. Somit sind bevorzugte Ausführungsformen der Folie fünfschichtig.

Die innere Zwischenschicht und die äußere Zwischenschicht enthalten jeweils unabhängig voneinander mindestens ein Polymer mindestens eines Olefins, bevorzugt mindestens ein Propylenpolymer, insbesondere mindestens ein Propylenhomopolymer. Weiterhin können die innere Zwischenschicht und die äußere Zwischenschicht jeweils unabhängig voneinander die für die einzelnen Schichten beschriebenen üblichen Additive, wie Antistatika, Neutralisationsmittel, Gleitmittel und/oder Stabilisatoren, sowie gegebenenfalls Pigmente enthalten.

Bevorzugte Polymere der Zwischenschichten sind isotaktische Propylenhomopolymere mit einem Schmelzpunkt von 140 bis 170°C, vorzugsweise von 150 bis 165°C, und einem Schmelzflußindex (Messung ISO 1133 bei 2,16 kg Belastung und 230°C) von 1,0 bis 10 g/10 min, vorzugsweise von 1,5 bis 6,5 g/10 min. Der n-heptanlösliche Anteil des Polymers beträgt im Allgemeinen 0,5 bis 10 Gew. %, vorzugsweise 2 bis 5 Gew.-%, bezogen auf das Ausgangspolymer. Für die Zwecke der vorliegenden Erfindung sind die vorstehend für die Basisschicht beschriebenen hochisotaktischen bzw. hochkristallinen Polypropylene in den Zwischenschichten einsetzbar und beispielsweise für Folien mit einer Dicke von unter 60µm, vorzugsweise von 35 bis 55, insbesondere 40 bis 50µm vorteilhaft. Gegebenfalls kann der Einsatz von hochkristallinen Polypropylene in den Zwischenschichten die Steifigkeit von Folien mit einer besonders niedrigen Dichte der Basisschicht verbessern.

Alternativ können die Zwischenschichten auch Propylenhomopolymere mir einer regulären Isotaktizität (¹³C-NMR) von 90 bis 96%, vorzugsweise 92 bis <95% eingesetzt werden, insbesondere für Folie mit einer Dicke von >50 bis 150µm, vorzugsweise >55 bis 100µm.

Die Zwischenschicht enthalten jeweils 90 - 100Gew.-% der beschriebenen, Propylenpolymeren, vorzugsweise Propylenhomopolymeren, sowie gegebenfalls zusätzlich die erwähnten Additive. Darüber hinaus können die innere Zwischenschicht und die äußere Zwischenschicht, insbesondere die äußere Zwischenschicht, Pigmente, insbesondere TiO₂, beispielsweise in einer Menge von 2 bis 8 Gew.-%, enthalten, wobei der Polymeranteil entsprechend reduziert wird.

Die Dicke der Zwischenschichten ist unabhängig voneinander und ist im Allgemeinen größer als 1µm und liegt vorzugsweise im Bereich von 1,5 bis 15 µm, insbesondere von 2 bis 10 µm, beispielsweise von 2,5 bis 8 µm oder von 3 bis 6 µm.

Besonders vorteilhafte Ausführungsformen weisen eine äußere Zwischenschicht auf, welche 4,5 bis 30 Gew.-%, insbesondere 5 bis 25 Gew.-% TiO₂ enthält und eine Schichtdicke von 0,5 bis 5µm, vorzusgweise 0,5 bis <3µm, aufweisen. Besonders vorteilhafte Ausführungsformen weisen auf dieser dünnen äußeren Zwischenschicht mit einem hohen Pigmentgehalt eine dünne äußere Deckschicht von <2µm, vorzugsweise >0 bis <1,8µm, beispielsweise 0,5 bis <1,5µm auf.

Die Gesamtdicke der erfindungsgemäßen Folie ist kleiner 150 µm, bevorzugt kleiner 100 µm, insbesondere höchstens 70 µm. Andererseits ist sie vorzugsweise größer 15 µm, bevorzugt größer 20 µm, insbesondere mindestens 25 µm. Dabei ist die Basisschicht im Allgemeinen die dickste Schicht der Folie und macht vorzugsweise 40 bis 99 % der Gesamtfoliendicke aus. Gegebenenfalls kann die Folie weitere Schichten aufweisen.

Auf Grund der bevorzugten Zusammensetzung der Schichten aus Propylenpolymeren wird die Folie als Polypropylenfolie bezeichnet. Dies bedeutet im Sinne der vorliegenden Erfindung, daß die Folie einen Anteil von mindestnes 70% an Propylen-Einheiten, vorzugsweise 90 bis 98% Propyleneinheiten, bezogen auf die Folie aufweist.

Die Herstellung der erfindungsgemäßen Folie kann auf an sich bekannte Weise, beispielsweise durch ein Coextrusionsverfahren, erfolgen. Im Rahmen dieses Verfahrens werden die den einzelnen Schichten der Folie entsprechenden Schmelzen gleichzeitig und gemeinsam durch eine Flachdüse coextrudiert, die so erhaltene Folie zur Verfestigung auf einer oder mehreren Walze/n abgezogen, die mehrschichtige Folie anschließend gestreckt (orientiert), die gestreckte Folie thermofixiert und auf der inneren Oberfläche einer Corona-Behandlung unterworfen, sowie gegebenenfalls auf der äußeren Oberflächen plasma-, corona-oder flammbehandelt.

Eine biaxiale Streckung (Orientierung) kann sequentiell oder simultan durchgeführt werden. Die sequentielle Streckung wird im Allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die weitere Beschreibung der Folienherstellung erfolgt am Beispiel der bevorzugten Flachfolienextrusion mit anschließender sequentialer Streckung.

Zunächst wird, wie beim Extrusionsverfahren üblich, das Polymer oder die Polymermischung der einzelnen Schichten in einem Extruder komprimiert und verflüssigt, wobei die gegebenenfalls zugesetzten Additive bereits im Polymer oder in der Polymermischung enthalten sein können. Die Schmelzen werden dann gemeinsam und gleichzeitig durch eine Flachdüse (Breitschlitzdüse) extrudiert und die mehrschichtige Schmelze wird auf einer oder mehreren Abzugswalzen vorzugsweise bei einer Temperatur von 10 bis 100°C, insbesondere 10 bis 50°C, abgezogen, wobei sie abkühlt und sich verfestigt.

Die so erhaltene unverstreckte Vorfolie-Folie wird dann im Allgemeinen längs und quer zur Extrusionsrichtung gestreckt, was zu einer Orientierung der Molekülketten führt. Das Längsstrecken wird man vorzugsweise bei einer Temperatur von 70 bis 130°C, insbesondere 80 bis 110°C, zweckmäßigerweise mit Hilfe zweier entsprechend dem angestrebten Streckverhältnis verschieden schnelllaufenden Walzen durchführen und das Querstrecken vorzugsweise bei einer Temperatur von 120 bis 180°C mit Hilfe eines entsprechenden Kluppenrahmens. Die Längsstreckverhältnisse liegen günstigerweise im Bereich von 3 bis 8, vorzugsweise 4 bis 6. Die Querstreckverhältnisse liegen günstigerweise im Bereich von 5 bis 10, vorzugsweise 7 bis 9.

An die Streckung der Folie schließt sich vorzugsweise ihre Thermofixierung (Wärmebehandlung) an, wobei die Folie günstigerweise etwa 0,1 bis 10 s lang vorzugsweise bei einer Temperatur von 100 bis 160°C gehalten wird. Anschließend wird die Folie in üblicher Weise mit einer Aufwickeleinrichtung aufgewickelt.

Nach der biaxialen Streckung wird die innere Oberfläche der Folie coronabehandelt, vorzugsweise wird die äußere Oberfläche ebenfalls nach einer der bekannten Methoden plasma-, corona- oder flammbehandelt. Die Behandlungsintensität liegt für beide Oberflächen unabhängig voneinander im Allgemeinen im Bereich von 35 bis 50 mN/m, vorzugsweise 37 bis 45 mN/m.

Bei der Coronabehandlung wird zweckmäßigerweise so vorgegangen, dass die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, dass Sprüh-oder Coronaentladungen stattfinden können. Durch die Sprüh- oder Coronaentladung wird die Luft oberhalb der Folienoberfläche ionisiert und reagiert mit den Molekülen der Folienoberfläche, so dass polare Einlagerungen in der im Wesentlichen unpolaren Polymermatrix entstehen.

Verfahren zur Flammbehandlung sind gleichfalls an sich bekannt und beispielsweise in der EP 0732 188 beschrieben. Die Behandlungsintensität liegt im allgemeinen im Bereich von 37 bis 50 mN/m, vorzugsweise 39 bis 45 mN/m. Im Allgemeinen wird diese Flammbehandlung mittels Flamme ohne Polarisation durchgeführt. Gegebenenfalls können auch polarisierte Flammen eingesetzt werden. Die Folie wird während der Flammbehandlung über eine Kühlwalze geführt, wobei oberhalb dieser Walze ein Brenner angebracht ist. Dieser Brenner ist im Allgemeinen in einem Abstand von 3 bis 10mm zur Folienoberfläche/Kühlwalze angebracht. Während des Kontaktes mit der Flamme erfährt die Folienoberfläche eine Oxidationsreaktion. Bevorzugt wird die Folie über die Kühlwalze, während der Behandlung gekühlt. Die Walzentemperatur liegt im Bereich von 15 bis 65°C, vorzugsweise 20 bis 50°C.

Die erfindungsgemäßen Folien werden im Bogendruckverfahren bedruckt. Im Allgemeinen umfasst eine hierfür geeignete Bogenoffsetmaschine Anleger, Druckwerk und Ausleger. Der Anleger dient zur Vereinzelung und Zuführung der Bögen in das erste Druckwerk, dem weitere Druckwerke folgen können. In den Druckwerken wird die Farbe bzw. Druckbild sowie ggf. der Überflack auf die Oberfläche übertragen. Nachdem die Bögen alle Druckwerke durchlaufen haben, gelangen sie in den Ausleger. Dieser dient zur Stapelbildung der bedruckten Bogen. Die erfindungsgemäße Folie ist für schnelle Druckmaschinen besonders geeignet, welche eine Geschwindigkeit von 8000 bis 18.000 Bogen pro Stunde, vorzugsweise 10.000 bis 15.000 Bogen pro Stunde erreichen. Die Größe der Bögen kann bis zu 1200x800mm betragen. Die bedruckten Bögen werden danach wieder vereinzelt, aus den bedruckten Bögen werden die einzelnen Etiketten zugeschnitten oder gestanzt und ihrerseits zu einem Stapel aus einzelnen bedruckten Etiketten gestapelt Gegebenenfalls können die Etiketten aus den gestapelten Bögen gestanzt werden, wie vorstehend auf Seite 2 beschrieben. Auf diese Weise werden direkt Stapel aus bedruckten Etiketten hergestellt. Die Etiketten können überraschenderweise in allen üblichen In-Mould Etikettierverfahren eingesetzt werden. Die erfindungsgemäße Folie eignet sich als In-Mold Etikett sowohl im Spritzgußverfahren als auch im Tiefziehverfahren. Bei dieser Verwendung wird die Folie während des Formgebungsverfahrens des Behälters appliziert und wird zum integralen Bestandteil des geformten Behälters. Die Behälter werden im Allgemeinen aus geeigneten Propylen- oder Ethylenpolymeren hergestellt, d.h. gespritzt oder tiefgezogen.

Beim Spritzgussverfahren erfolgt zunächst die Entnahme der einzelnen, ggf. zugeschnittenen Etiketten von einem Stapel, damit diese in eine Spritzgussform eingelegt werden können. Die Form ist dabei so gestaltet, dass der Schmelzestrom des Polymeren hinter das Etikett gespritzt wird und die Vorderseite der Folie an der Wandung der Spritzgussform anliegt. Beim Spritzen verbindet sich die heiße Schmelze mit dem Etikett. Nach dem Spritzen öffnet sich das Werkzeug, der Spritzling mit Etikett wird ausgestoßen und kühlt ab. Im Ergebnis wird ein etikettierter Behälter hergestellt, an dem das Etikett faltenfrei und optisch einwandfrei auf dem Behälter haftet.

Beim Spritzen liegt der Einspritzdruck vorzugsweise in einem Bereich von 300 bis 600 bar. Die zum Einsatz kommenden Kunststoffe, insbesonder Propylenpolymere oder Polyethylene haben zweckmäßigerweise einen Schmelzflußindex von um die 40 g/10 min. Die Einspritztemperaturen hängen von dem eingesetzten Kunststoff ab. In manchen Fällen wird die Form zusätzlich gekühlt und ein Verkleben des Spritzlings mit der Form zu vermeiden.

Alternativ ist auch die Verwendung der erfindungsgemäßen Folie bei der Behälterformung durch ein Tiefziehverfahren besonders vorteilhaft. Beim Tiefziehen werden unorientierte dicke Kunststoffplatten, meist gegossenes PP oder PS (Polystyrol), in einer Dicke von vorzugsweise ca. 200 - 750 µm erwärmt und bevorzugt mittels Vakuum oder Stempelwerkzeugen in ein entsprechendes Formwerkzeug gezogen oder gedrückt. Auch hierbei wird das einzelne Etikett in die Form eingelegt und verbindet sich beim Formprozeß mit dem eigentlichen Behälter. Es kommen in der Regel erheblich niedrigere Temperaturen zur Anwendung als beim Spritzgießen des Behälters. Daher sind hier als Etiketten mit einer niedrigsiegelnden inneren Deckschicht bevorzugt.

Im Folgenden wird die vorliegende Erfindung durch Beispiele und Vergleichsbeispiele weiter veranschaulicht, ohne dass hierdurch eine Beschränkung des Erfindungsgedanken erfolgen soll.

Dabei wurden zur Charakterisierung der Rohstoffe und der Folien die folgenden Messmethoden benutzt:

### Schmelzflußindex

Der Schmelzflußindex der Propylenpolymeren wurde nach ISO 1133 bei 2,16 kg Belastung und 230°C gemessen und bei 190°C und 21,6 kg für Polyethylene.

### Schmelzpunkte

Der Schmelzpunkt wird nach DIN 51007 als Maximum der Schmelzkurve aus einer DSC-Messung bestimmt, wobei die Schmelzkurve mit einer Aufheizgeschwindigkeit 20 K/min aufgenommen wird.

### Dichte

Die Dichte der Polymeren wird nach DIN 53 479, Verfahren A, bestimmt. Die Dichte der Folien wird aus der gemessenen Dicke und dem gemessenen Flächengewicht berechnet (ISO 4593).

### Oberflächenspannung

Die Oberflächenspannung wurde mittels Tintenmethode nach DIN ISO 8296 bestimmt.

### Rauheitsmessung

Die Rauheitswerte Rz der Folien wurden in Anlehnung an DIN 4768 Teil 1 und DIN 4777 sowie DIN 4772 und 4774 mittels eines Digitalmikroskops der Fa. Leica gemessen, wobei der Cut-off des RC-Filters gemäß DIN 4768/1 auf 0,25 mm eingestellt wurde.

### Glanzmessung

Die Messung erfolgte gemäß DIN EN ISO 2813 bei einem Winkel von 60°. Als Standard wurde eine polierte, dunkel gefärbte Glasplatte mit einem Brechungsindex von 1,567 (gemessen bei einer Wellenlänge von 587,6 nm und 25°C ) verwendet, deren Glanz 100 Glanzeinheiten entspricht.

### Farbübertragung

Zunächst werden Folienstreifen in einer Größe von ca. 7cm x 30cm zugeschnitten. Die Hälfte dieser Streifen werden mit einer schwarzen Offsetfarbe auf der äußeren Deckschicht mit einem IGT Offsetdruckgerät C1 bedruckt. Die bedruckte Fläche beträgt ca. 0,0071 m², der Farbauftrag 1 g/m², und der Anpressdruck 100 N. Unmittelbar nach dem Bedrucken wird die bedruckte Oberfläche mit einem zweiten Streifen gleicher Größe abdeckt (oberer Streifen), wobei die inneren Deckschicht (des oberen Streifens) auf die bedruckte Oberfläche des bedruckten (unteren) Streifen gelegt wird. Jeweils 4 Streifenpaare werden so präpariert und nebeneinander auf einem DIN A4-Blatt fixiert und mit einer Spanholzplatte (28 cm x 37 cm x 2 cm, 1,2 kg) abgedeckt. Anschließend wird die Spannholzplatte mit einem zusätzlichen Gewicht (0,5 kg, 5 kg, 20 kg) beschwert. Nach 24h werden die Gewichte und die Spannholzplatte entfernt und jeweils der untere und der obere Streifen mit der Hand voneinander getrennt. Der Farbübertrag von dem bedruckten, unteren Streifen auf die innere Deckschicht des unbedruckten, oberen Streifens wird visuell beurteilt.

### Trennkraft-Bestimmung

Zur Bewertung der Vereinzelbarkeit von bedruckten Bögen wird die Kraft bestimmt, die benötigt um aufeinander liegende Folienlagen zu trennen. Aus den Folien nach den Beispielen und den Vergleichsbeispielen werden rechteckige Muster zugeschnitten. Folienlagen dieser Muster werden so aufeinander gestapelt, daß jeweils die innere Oberfläche und die äußere Oberfläche der Folie miteinander in Kontakt stehen. Um die Folienmuster in die Zugprüfmachine einspannen zu können, wird jeweils ein wenige Zentimeter breiter Streifen am Rande der Probe abgedeckt, z.B. mit einem Papier. Zusätzlich wird jede zweite Kontaktfläche komplett abgedeckt, um jeweils zwei aufeinander liegende Folienmuster zwecks Messung vereinzeln zu können.

Der Stapel aus den einzelnen Folienlagen wird mittels einer Kipphebelpresse unter einem Druck von 100 N/cm² bei Zimmertemperatur 24 Std gepreßt, um die Bedingungen in der Praxis zu simulieren. Danach werden die Folienproben aus jeweils zwei Mustern vereinzelt, in 30mm breite Streifen geschnitten und in einer Zugprüfmaschine (z.B. Zwick) eingespannt, so daß die Folienlagen unter einem Winkel von zweimal 90° voneinander getrennt werden. Dabei wird die Kraft gemessen, die zur Trennung der Folienlagen benötigt wird. Der Mittelwert aus drei Messungen wird zur Bewertung herangezogen.

### Viskosität

Die Viskosität wird mittels eines Rotationsviskosimetern nach DIN 53019 Teile -1 bis -4 gemessen.

### Bestimmung der Siegelanspringtemperatur (SIT)

Es werden zwei Folienstreifen geschnitten und mit den jeweils zu prüfenden Deckschichten aufeinander gelegt. Mit dem Siegelgerät HSG/ETK der Fa. Brugger werden heissgesiegelte Proben (Siegelnaht 20 mm x 100 mm) hergestellt, indem die aufeinandergelegten Streifen bei unterschiedlichen Temperaturen mit Hilfe zweier beheizter Siegelbacken bei einem Siegeldruck von 10 N/cm² und einer Siegeldauer von 0,5 s gesiegelt werden. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur ist die Temperatur, bei der eine Siegelnahtfestigkeit von mindestens 1,0 N/15 mm erreicht wird.

### Die Erfindung wird nachstehend durch die folgenden Beispiele erläutert.

### Beispiel 1 (einseitig matt, 1,5% PDMS)

Nach dem Coextrusionsverfahren wurde aus einer Breitschlitzdüse eine fünfschichtige Vorfolie extrudiert. Diese Vorfolie wurde auf einer Kühlwalze abgezogen, verfestigt und anschließend in Längs- und Querrichtung orientiert und abschließend fixiert. Die Oberfläche der äußeren und der inneren Deckschicht wurde mittels Corona vorbehandelt. Die fünfschichtige Folie hatte einen Schichtaufbau innere Deckschicht/innere Zwischenschicht/Basisschicht/äußere Zwischenschicht/äußere Deckschicht. Die einzelnen Schichten der Folie hatten die folgende Zusammensetzung:

**innere Deckschicht I (2,3 µm):**

| | |
|---|---|
| ~60 Gew.-% | Ethylen-Propylencopolymerisat mit einem Schmelzpunkt von 135°C und einem Schmelzflußindex von 7,3 g/10 min bei 230°C und 2,16 kg Belastung (ISO 1133) |
| ~38,5 Gew.-% | MDPE mit einem MFI von 14,4 g/10min (21,6 kg und 190°C); Dichte von 0,937g/ccm3 und einem Schmelzpunkt von 126°C |
| 1,5 Gew.-% | Polydimethylsiloxan mit einer Viskosität von 300.000 mm²/s. |
| 0,33 Gew.-% | SiO2 als Antiblockmittel mit einer mittleren Teilchengröße von 5 µm |

**innere Zwischenschicht I (4,0 µm)**

| | |
|---|---|
| 99,88 Gew.-% | Propylenhomopolymer mit einem n-heptanlöslichen Anteil von 4,5 Gew. % (bezogen auf 100 % PP), einem Schmelzpunkt von 165°C und einem Schmelzflußindex von 3,2 g/10 min bei 230°C und 2,16 kg Belastung (ISO 1133) |
| 0,12 Gew.-% | Erucasäureamid (ESA) |

**Basisschicht (40,2 µm)**

| | |
|---|---|
| 85,95 Gew.-% | Propylenhomopolymerisat (PP) mit einem n-heptanlöslichen Anteil von 4,5 Gew. % (bezogen auf 100 % PP) und einem Schmelzpunkt von 165°C und einem Schmelzflußindex von 3,2 g/10 min bei230°C und 2,16 kg Belastung (ISO 1133) |
| 14 Gew.-% | Calciumcarbonat mit einem mittleren Teilchendurchmesser von 3,5 µm |
| 0,05 Gew.-% | Erucasäureamid (ESA) |

**äußere Zwischenschicht II (3,0 µm)**

| | |
|---|---|
| 94 Gew.-% | Propylenhomopolymerisat (PP) mit einem n-heptanlöslichen Anteil von 4,5 Gew. % (bezogen auf 100 % PP), einem Schmelzpunkt von 165°C und einem Schmelzflußindex von 3,2 g/10 min bei 230°C und 2,16 kg Belastung (ISO 1133) |
| 6 Gew.-% | TiO₂ mit einem mittleren Teilchendurchmesser von 0,1 bis 0,3 µm |

**äußere Deckschicht II (0,8 µm):**

| | |
|---|---|
| ~100 Gew.-% | Ethylen-Propylencopolymerisat mit einem Schmelzpunkt von 135°C und einem Schmelzflußindex von 7,3 g/10 min bei 230°C und 2,16 kg Belastung (ISO 1133) |

Alle Schichten der Folie enthielten zusätzlich Stabilisator und Neutralisationsmittel in üblichen Mengen.

Im Einzelnen wurden die folgenden Bedingungen und Temperaturen bei der Herstellung der Folie gewählt:
- Extrusion:: Extrusionstemperatur ca. 250°C
- Abkühlwalze:: Temperatur 25°C
- Längsstreckung:: T = 120°C
- Längsstreckung um den: Faktor 4,8
- Querstreckung:: T = 155°C
- Querstreckung um den: Faktor 8
- Fixierung: T = 133°C

Die Folie wurde auf beiden Oberflächen mittels Corona oberflächenbehandelt. Die Folie hatte ein opakes Aussehen und eine Dichte von 0,56 g/cm³ und eine Dicke von 50 µm.

### Beispiel 2 (einseitig matt, 1% PDMS)

Es wurde eine Folie nach Beispiel 1 hergestellt im Unterschied zu Beispiel 1 wurde der Gehalt an Polydimethylsiloxan auf 1 Gew.-% erniedrigt. Die Dicken der Schichten, sowie die Zusammensetzung aller übrigen Schichten, sowie die Bedingungen bei der Herstellung der Folie blieben unverändert.

### Beispiel 3 (einseitig matt, 2% PDMS)

Es wurde eine Folie nach Beispiel 1 hergestellt im Unterschied zu Beispiel 1 wurde der Gehalt an Polydimethylsiloxan auf 2 Gew.-% erhöht. Die Dicken der Schichten, sowie die Zusammensetzung aller übrigen Schichten, sowie die Bedingungen bei der Herstellung der Folie blieben unverändert.

### Beispiel 4 (beidseitig matt, 1,5% PDMS)

Es wurde eine Folie nach Beispiel 1 hergestellt im Unterschied zu Beispiel 1 wurde die Zusammensetzung der äußeren Deckschicht geändert. Die äußere Deckschicht hatte jetzt die gleiche Zusammensetzung wie die innere Deckschicht, zusätzlich wurde die Dicke der inneren Deckschicht auf 1,5µm erniedrigt. Die Dicken der Schichten, sowie die Zusammensetzung aller übrigen Schichten, sowie die Bedingungen bei der Herstellung der Folie blieben unverändert.

### Beispiel 5 (beidseitig matt, 1,5% PDMS ohne innere ZWS)

Es wurde eine Folie nach Beispiel 3 hergestellt im Unterschied zu Beispiel 3 wurde die innere Zwischenschicht weggelassen und somit eine vierschichtige Folie hergestellt. Die Dicke der Basisschicht wurde um 4µm erhöht, um eine Folie mit vergleichbarer Dicke zu erhalten. Die Dicken der übrigen Schichten, sowie die Zusammensetzung aller übrigen Schichten, sowie die Bedingungen bei der Herstellung der Folie blieben unverändert.

### Beispiel 6 (einseitig matt, 1,5% PDMS + Tafmer)

Es wurde eine Folie nach Beispiel 1 hergestellt im Unterschied zu Beispiel 1 wurde die Zusammensetzung der inneren Deckschicht geändert. Der inneren Deckschicht wurde zusätzlich ein Polymer mit niedrigem Schmelzpunkt hinzugefügt. Die Dicken der Schichten, sowie die Zusammensetzung aller übrigen Schichten, sowie die Bedingungen bei der Herstellung der Folie blieben unverändert.

**innere Deckschicht I (2,3 µm):**

| | |
|---|---|
| ~20 Gew.-% | Ethylen-Propylencopolymerisat mit einem Schmelzpunkt von 135°C und einem Schmelzflußindex von 7,3 g/10 min bei 230°C und 2,16 kg Belastung (ISO 1133) |
| ~40 Gew.-% | C3C4- Copolymer Tafmer XM7070 |
| ~38,5 Gew.-% | MDPE mit einem MFI von 14,4 g/10min (21,6 kg und 190°C); Dichte von 0,937g/ccm3 und einem Schmelzpunkt von 126°C |
| 1,5 Gew.-% | Polydimethylsiloxan mit einer Viskosität von 300.000 mm²/s. |
| 0,33 Gew.-% | SiO2 als Antiblockmittel mit einer mittleren Teilchengröße von 5 µm |

### Vergleichsbeispiel 1 (einseitig matt, ohne PDMS)

Es wurde eine Folie nach Beispiel 1 hergestellt im Unterschied zu Beispiel 1 wurde die Zusammensetzung der inneren Deckschicht geändert. Die innere Deckschicht enthielt jetzt kein Polydialkylsiloxan. Die Dicken der Schichten, sowie die Zusammensetzung aller übrigen Schichten, sowie die Bedingungen bei der Herstellung der Folie blieben unverändert.

### Vergleichsbeispiel 2 (einseitig matt, 1,5% PDMS mit niedriger Viskosität)

Es wurde eine Folie nach Beispiel 1 hergestellt im Unterschied zu Beispiel 1 wurde die Zusammensetzung der inneren Deckschicht I geändert. Im Unterschied zu Beispiel 1 wurde anstelle des Polydimethylsiloxan mit einer Viskosität von 300.000 mm²/s ein Polydimethylsiloxan mit einer Viskosität von 30.000 mm²/s in der gleichen Menge eingesetzt. Die Dicken der Schichten, sowie die Zusammensetzung aller übrigen Schichten, sowie die Bedingungen bei der Herstellung der Folie blieben unverändert.

### Vergleichsbeispiel 3 (einseitig matt, 1,5% PDMS ohne Corona)

Es wurde eine Folie nach Beispiel 1 hergestellt im Unterschied zu Beispiel 1 wurde jetzt keine Oberflächenbehandlung der inneren Deckschicht durchgeführt. Die Dicken der Schichten, sowie die Zusammensetzung aller übrigen Schichten, sowie die Bedingungen bei der Herstellung der Folie blieben unverändert.

### Vergleichsbeispiel 4 (beidseitig Glanz, 1,5% PDMS ohne MDPE)

Es wurde eine Folie wie in Beispiel 1 beschrieben hergestellt. Im Unterschied zu Beispiel 1 wurde der inneren Deckschicht kein MDPE zugesetzt. Der Gehalt an Propylenpolymer wurde entsprechend auf ~98Gew.-% erhöht. Die übrige Zusammensetzung und die Verfahrensbedingungen bei der Herstellung der Folie wurden nicht geändert.

| | |
|---|---|
| ~98 Gew.-% | Ethylen-Propylencopolymerisat mit einem Schmelzpunkt von 135°C und einem Schmelzflußindex von 7,3 g/10 min bei 230°C und 2,16 kg Belastung (ISO 1133) |
| 1,5 Gew.-% | Polydimethylsiloxan mit einer Viskosität von 300.000 mm²/s. |
| 0,33 Gew.-% | SiO2 als Antiblockmittel mit einer mittleren Teilchengröße von 5 µm |

### Vergleichsbeispiel 5 (einseitig matt, ESA statt PDMS)

Es wurde eine Folie nach Beispiel 1 hergestellt im Unterschied zu Beispiel 1 wurde die Zusammensetzung der inneren Deckschicht I geändert. Im Unterschied zu Beispiel 1 wurde kein Polydimethylsiloxan, aber stattdessen ein Erucasäureamid in einer Menge von 0,5 Gew.% eingesetzt. Die Dicken der Schichten, sowie die Zusammensetzung aller übrigen Schichten, sowie die Bedingungen bei der Herstellung der Folie blieben unverändert.

Die Folien nach den Beispielen und den Vergleichsbeispielen wurden zunächst bei unterschiedlichen Bedingungen für unterschiedliche Zeiträume gelagert und dann hinsichtlich ihrer Eigenschaften untersucht. Anschließend wurden die Folien im Bogendruckverfahren bedruckt. Die bedruckten Bögen wurden gestapelt. Anschließend wurden die bedruckten Bögen vereinzelt, die jeweiligen Etiketten aus dem Bogen gestanzt und die Etiketten ihrerseits gestapelt.

Die gestapelten Etiketten wurden anschließend im Spritzgußverfahren und im Tiefziehverfahren als Etiketten eingesetzt. Der Ergebnisse werden in der nachstehenden Tabelle zusammengefasst.

Die erfindungsgemäße Verwendung wird im Einzelnen nachfolgend beschrieben:
Die Folien gemäß den Beispielen und den Vergleichsbeispielen wurden zu großformatigen Sheets von 70cm X 70cm zugeschnitten und gestapelt. Die einzelnen Sheets wurden mit einem 4-fach Rapport bedruckt und die bedruckten Bögen gestapelt. Aus den bedruckten Sheets wurden die Rapporte als einzelne Etiketten ausgestanzt, gestapelt und abschließend an einer Etikettier Maschine bereitgestellt. Die Etiketten wurden zur Etikettierung von tiefgezogenen und spritzgegossenen Behältern eingesetzt.

Die Folien gemäß den Beispielen 1 bis 5 ließen sich mit hoher Geschwindigkeit im Bogendruckverfahren bedrucken und die bedruckten Bögen ließen sich ohne Farbübertrag vereinzeln. Bei Bedrucken der Bögen konnte die Geschwindigkeit auf bis zu 10.000 Bögen pro Stunde gesteigert werden. Die Etiketten, welche aus den Bögen gestanzt wurden ließen sich ebenfalls problemlos stapeln und entstapeln und zeigten eine gute Haftung gegenüber dem Behälter. Auf diese Weise wurden optisch einwandfrei etikettierte Behälter hergestellt.

Die Folien nach den Vergleichsbeispielen konnten nicht mit dieser Geschwindigkeit verarbeitet werden, sowohl beim Bedrucken als auch beim Etikettieren musste die Prozeß-Geschwindigkeit reduziert werden (siehe Tabelle). Trotz verringerter Geschwindigkeit traten in unterschiedlichem Maß Störungen durch Fehl- oder Doppeleinzug auf, wodurch teilweise der Druckprozeß oder der Etikettier-Prozess unterbrochen werden musste.

**Tabelle**

| Beispiel | Folienstruktur | Bogendruck-verfahren | | Bogenstapel Farbübertragung/Entstapelbarkeit | Haftung gegen den Behälter | | Bedruckbarkeit der Außenseite |
|---|---|---|---|---|---|---|---|
| | | V Max | Laufverhalten | | Spritzguß | Tiehziehen | |
| 1 | einseitig matt, 1,5% PDMS | ++ | ++ | Keine/+++ | +++ | + | +++ |
| 2 | einseitig matt, 1,0% PDMS | ++ | ++ | kaum sichtbar /++ | +++ | + | +++ |
| 3 | einseitig matt, 2,0% PDMS | +++ | +++ | Keine/+++ | +++ | + | ++ |
| 4 | beidseitig matt, 1,5% PDMS | +++ | +++ | Keine/++++ | +++ | + | ++^{*} |
| 5 | beidseitig matt, 1,5% PDMS ohne innere ZWS | ++ | ++ | Keine/++ | +++ | + | ++^{*} |
| 6 | einseitig matt, 1,5% PDMS +Tafmer | ++ | ++ | Keine/+++ | +++ | ++ | +++ |
| VB 1 | einseitig matt, ohne PDMS | +/- | +/- | Sehr deutlich/ - | +++ | + | +++ |
| VB 2 | einseitig matt, 1,5% PDMS mit niedriger Viskosität | ++ | ++ | Keine /- | ++ | + | - - |
| VB 3 | einseitig matt, 1,5% PDMS ohne Corona | +++ | +++ | Deutlich/++ | ++ | + | - - - |
| VB 4 | beidseitig Glanz, 1,5% PDMS ohne MDPE | + | + | Keine/- - | +++ | Blasen | +++ |
| VB 5 | einseitig matt, ESA statt PDMS | +/- | +/- | Deutlich/-** | ++ | - | ++ |

| | | | | | | | |
|---|---|---|---|---|---|---|---|
| *niedrigerer Glanz **schwankend | | | | | | | |

## Patentansprüche

1. Opake mehrschichtige biaxial orientierte Polypropylenfolie welche mindestens eine vakuolenhaltigen Basisschicht und eine bedruckbare äußere Deckschicht und eine inneren matte Deckschicht umfasst, wobei die innere Deckschicht mindestens zwei inkompatible Polymere enthält und eine Oberflächenrauheit Rz von mindesten 2,0µm, bestimmt gemäß DIN 4768 Teil 1 bei einem cut off des RC-Filters gemäß DIN 4768/1 von 0,25mm, aufweist, **dadurch gekennzeichnet, daß** die innere matte Deckschicht ein Polydialkylsiloxan enthält, welches eine Viskosität von 100.000 bis 500.000 mm²/s aufweist und die Oberfläche dieser inneren Deckschicht mittels Corona oberflächenbehandelt ist.

2. Folie nach Anspruch 1, **dadurch gekennzeichnet, daß** die Mischung aus inkompatiblen Polymeren mindestens ein Polyethylen und ein Propylenpolymer enthält.

3. Folie nach Anspruch 1 oder 2, **dadurch gekennzeichnet, dass** das Polyethylen ein HDPE oder ein MDPE ist und das Polypropylenpolymere ein Propylenco- oder Propylenterpolymer oder ein Propylenhomopolymer ist

4. Folie nach einem der Ansprüche 1 bis 3, **dadurch gekennzeichnet, dass** die innere Deckschicht >0,5 Gew.-% Polydialkylsiloxan, bezogen auf das Gewicht der inneren Deckschicht enthält.

5. Folie nach einem der Ansprüche 1 bis 4, **dadurch gekennzeichnet, dass** das Polydialkylsiloxan eine Viskosität von 150.000 bis 400.000 mm²/s aufweist

6. Folie nach einem oder mehreren der Ansprüche 1 bis 5, **dadurch gekennzeichnet, dass** die Dicke der inneren Deckschicht 0,5 bis 5µm beträgt.

7. Folie nach einem oder mehreren der Ansprüche 1 bis 6, **dadurch gekennzeichnet, daß** die innere Deckschicht zusätzlich Antiblockmittel, vorzugsweise vernetzte Silikone oder vernetzte Polymethylmethacrylat-Partikel, enthält.

8. Folie nach einem oder mehreren der Ansprüche 1 bis 7, **dadurch gekennzeichnet, daß** die äußere Deckschicht aus Propylenpolymeren aufgebaut ist und einen Glanz von 15 bis 40, gemessen gemäß DIN EN ISO 2813 bei einem Winkel von 60°, aufweist.

9. Folie nach einem oder mehreren der Ansprüche 1 bis 7, **dadurch gekennzeichnet, daß** die äußere Deckschicht Propylenpolymere und ein unverträgliches Polyethylen enthält und Oberflächenrauheit Rz in einem Bereich von 2,0 - 6 µm bei einem Cut-off von 0,25mm aufweist und sich die Rz Werte der inneren und der äußeren Oberfläche um maximal 2µm unterscheiden.

10. Folie nach einem oder mehreren der Ansprüche 1 bis 7, **dadurch gekennzeichnet, daß** die Folie zusätzlich eine innere Zwischenschicht und eine äußere Zwischenschicht aufweist und die äußere Zwischenschicht eine Dicke von 0,5 bis 5µm aufweist und 4,5 bis 30 Gew.-% Pigmente, vorzugsweise TiO₂ enthält.

11. Verwendung einer Folie nach einem der Ansprüche 1 bis 10 im Bogenoffsetdruck, **dadurch gekennzeichnet** das Bögen bedruckt werden und gestapelt werden.

12. Verwendung einer Folie nach einem der Ansprüche 1 bis 10 als In-Mold Etikett im Tiefziehverfahren.

13. Verwendung nach Anspruch 12, **dadurch gekennzeichnet, dass** die innere Deckschicht eine Siegelanspringtemperatur von 80 bis 110°C aufweist.

## Claims

1. An opaque multi-layer biaxially oriented polypropylene film comprising at least one vacuole-containing base layer and a printable outer cover layer and an inner matte cover layer, the inner cover layer containing at least two incompatible polymers and having a surface roughness Rz of at least 2.0 µm, determined in accordance with DIN 4768 Part 1 for a cut-off of the RC filter according to DIN 4768/1 of 0.25mm, **characterized in that** the inner matte cover layer contains a polydialkylsiloxane having a viscosity of 100,000 to 500,000 mm²/s and the surface of this inner cover layer is surface treated by means of corona.

2. The film according to claim 1, **characterized in that** the mixture of incompatible polymers contains at least one polyethylene and one propylene polymer.

3. The film according to claim 1 or 2, **characterized in that** the polyethylene is an HDPE or an MDPE and the polypropylene polymer is a propylene copolymer or propylene terpolymer or a propylene homopolymer.

4. The film according to any one of claims 1 to 3, **characterized in that** the inner cover layer contains > 0.5% by weight of polydialkylsiloxane, based on the weight of the inner cover layer.

5. The film according to any one of claims 1 to 4, **characterized in that** the polydialkylsiloxane has a viscosity of 150,000 to 400,000 mm²/s.

6. The film according to any one or more of claims 1 to 5, **characterized in that** the thickness of the inner cover layer is 0.5 to 5 µm.

7. The film according to any one or more of claims 1 to 6, **characterized in that** the inner cover layer additionally contains anti-blocking agents, preferably cross-linked silicones or cross-linked polymethyl methacrylate particles.

8. The film according to any one or more of claims 1 to 7, **characterized in that** the outer cover layer is made up of propylene polymers and has a gloss of 15 to 40, measured in accordance with DIN EN ISO 2813 at an angle of 60°.

9. The film according to any one or more of claims 1 to 7, **characterized in that** the outer cover layer contains propylene polymers and an incompatible polyethylene and has a surface roughness Rz in a range of 2.0 - 6 µm with a cut-off of 0.25 mm and the Rz values of the inner and outer surface differ by a maximum of 2 µm.

10. The film according to any one or more of claims 1 to 7, **characterized in that** the film additionally has an inner intermediate layer and an outer intermediate layer and the outer intermediate layer has a thickness of 0.5 to 5 µm and contains 4.5 to 30% by weight of pigments, preferably TiO₂.

11. A use of a film according to any one of claims 1 to 10 in sheet-fed offset printing, **characterized in that** sheets are printed and stacked.

12. The use of a film according to any one of claims 1 to 10 as an in-mold label in the deep-drawing process.

13. The use according to claim 12, **characterized in that** the inner cover layer has a seal light-off temperature of 80 to 110°C.

## Revendications

1. Feuille de polypropylène multicouche opaque à orientation biaxiale qui comprend une couche de base contenant des vacuoles et une couche de couverture extérieure pouvant servir de support d'impression et une couche de couverture mate intérieure, la couche de couverture intérieure contenant au moins deux polymères incompatibles et présentant une rugosité de surface Rz, déterminée selon la norme DIN 4768 partie 1 à une valeur seuil du filtre RC égale à 0,25 mm selon la norme DIN 4768/1, d'au moins 2,0 µm, **caractérisée en ce que** la couche de couverture mate intérieure contient un polydialkylsiloxane dont la viscosité est comprise entre 100.000 et 500.000 mm²/s, et la surface de cette couche de couverture intérieure ayant subi un traitement de surface de type corona.

2. Feuille selon la revendication 1, **caractérisée en ce que** le mélange de polymères incompatibles contient au moins un polyéthylène et un polymère de propylène.

3. Feuille selon les revendications 1 ou 2, **caractérisée en ce que** le polyéthylène est un PE-HD ou un PE-MD et que le polymère de polypropylène est un co- ou terpolymère de propylène ou un homopolymère de propylène.

4. Feuille selon l'une des revendications 1 à 3, **caractérisée en ce que** la couche de couverture intérieure contient > 0,5 % en poids de polydialkylsiloxane, par rapport au poids de la couche de couverture intérieure.

5. Feuille selon l'une des revendications 1 à 4, **caractérisée en ce que** le polydialkylsiloxane présente une viscosité comprise entre 150.000 et 400.000 mm²/s.

6. Feuille selon une ou plusieurs des revendications 1 à 5, **caractérisée en ce que** l'épaisseur de la couche de couverture intérieure est comprise entre 0,5 et 5 µm.

7. Feuille selon une ou plusieurs des revendications 1 à 6, **caractérisée en ce que** la couche de couverture intérieure contient en outre des agents antiadhérents, préférentiellement des silicones réticulés ou des particules en polyméthylméthacrylate réticulé.

8. Feuille selon une ou plusieurs des revendications 1 à 7, **caractérisée en ce que** la couche de couverture extérieure est constituée de polymères de propylène et présente une valeur de brillance comprise entre 15 et 40, mesurée selon la norme DIN EN ISO 2813 à un angle de 60°.

9. Feuille selon une ou plusieurs des revendications 1 à 7, **caractérisée en ce que** la couche de couverture extérieure contient des polymères de propylène et un polyéthylène incompatible et présente une rugosité de surface Rz comprise entre 2,0 et 6 µm lorsque la valeur seuil est égale à 0,25 mm, et les valeurs Rz des surfaces intérieure et extérieure présentent une différence inférieure ou égale à 2 µm.

10. Feuille selon une ou plusieurs des revendications 1 à 7, **caractérisée en ce que** la feuille comporte en outre une couche intermédiaire intérieure et une couche intermédiaire extérieure, et la couche intermédiaire extérieure présente une épaisseur comprise entre 0,5 et 5 µm et contient 4,5 à 30 % en poids de pigments, préférentiellement de TiO₂.

11. Utilisation d'une feuille selon l'une des revendications 1 à 10 dans l'impression offset à feuilles, **caractérisée en ce qu'**elle consiste à réaliser une impression sur des feuilles et à empiler ces dernières.

12. Utilisation d'une feuille selon l'une des revendications 1 à 10 en tant qu'étiquette que l'on place dans le moule lors d'un procédé d'emboutissage.

13. Utilisation selon la revendication 12, **caractérisée en ce que** ladite couche de couverture intérieure présente une température d'amorçage de scellage comprise entre 80 et 110 °C.
